# EUROPEAN PATENT APPLICATION

(11) **EP 2 945 425 A1**
(43) Date of publication of application: **18.11.2015**
(21) Application number: 13870928.2
(22) Date of filing: 09.01.2013
(51) Int. Cl.: H04W 36/14

(54) **METHOD AND DEVICE FOR SELECTING LONG TERM EVOLUTION (LTE) NETWORK**

(71) Applicant: Huawei Technologies Co., Ltd., Longgang District Shenzhen, Guangdong 518129 (CN)
(72) Inventor: SHU, Lin, Shenzhen Guangdong 518129 (CN); WU, Xiaobo, Shenzhen Guangdong 518129 (CN)
(74) Representative: Isarpatent
(86) International application number: PCT/CN2013/070283
(87) International publication number: WO 2014/107855

(57) **Abstract**

A method and device for selecting an LTE network, relating to the technical field of communications, are disclosed in the present invention are, which makes that a UE can returns to an LTE PLMN registered when CSFB is initiated after the CSFB service, thereby ensuring the continuity of PS service, avoiding an unnecessary inter-PLMN network switch and promoting the user experience. The method provided in the present invention mainly comprises: performing, by a UE, a combined registration in the LTE PLMN; initiates, by the UE, a CSFB service to fall back to a 2G/3G network, and receiving an equivalent PLMN list in the 2G/3G network; adding, by the UE, identity information of the LTE PLMN to the equivalent PLMN list; performing, by the UE, a PLMN selection according to the equivalent PLMN list when the CSFB service ends. The embodiments of the present invention are mainly used for a process of returning to an LTE network when a CSFB service ends.

## Description

### TECHNICAL FIELD

The present invention relates to the technical field of communications, and particularly relates to a method and device for selecting a Long Term Evolution (Long Term Evolution, LTE) network when a Circuit Domain Fallback (Circuit Switched Fallback, CSFB) service ends.

### BACKGROUND

A Circuit Domain (Circuit Service, CS) network is a wireless network for providing circuit domain services such as a voice call and the like, and the coverage of a 2nd Generation/3rd Generation (2G/3G) network such as GSM, WCDMA and the like is very universal. Meanwhile, with a development of network technology, a packet domain (Packet Service, PS) network, such as a Long Term Evolution (Long Term Evolution, LTE) network, which specializes in providing a data service, is being deployed in a large scale. Therefore, the CS domain network and the PS domain network co-exist in present communication networks, and an operator may provide a circuit domain service for a user by using a 2G/3G network and provide a data service for a user by using an LTE network.

Based on this network coverage mode, the 3rd Generation Partnership Project (3rd Generation Partnership Project, 3GPP) organization proposes a "circuit switched fallback" (CS Fallback, CSFB) technology, so that a user equipment (User Equipment, UE) registered to the LTE network returns to a CS domain of a 2G/3G network to complete the service processing when a CS voice service is required to be processed. In a situation that the CS voice call is finished, the present protocol further defines a CSFB return mechanism to ensure that a UE may return to the PS domain network to perform a PS service after a CS voice call is finished, which specifically includes: a Mobile Switching Centre (MSC)/ Visitors Location Register (VLR) releases a connection established by a CS voice call and indicates a base station that the current connection is established due to a CSFB; and the base station indicates LTE frequency band (Frequency) information for a UE to reselect an LTE network back when the base station releases the connection, so that when a suitable cell on the LTE frequency band corresponding to the LTE frequency band information is redirected, the UE randomly selects an available LTE Public Land Mobile Network (Public Land Mobile Network, PLMN) in broadcast information of the suitable cell.

In the process of realizing the aforementioned returning to an LTE network, the inventor discovers that there exists at least the following problems in the prior art: since a UE is probably in LTE network coverage of several different PLMNs when a CS domain voice service ends, for example, both an LTE PLMN registered by the UE when a CSFB is initiated and an LTE network of a PLMN of the current CS service are available for the UE, and typically, if the UE enters a shared LTE cell when the CS voice service is finished, the UE may acquire several available LTE PLMNs in the LTE cell. Under the scenario that several LTE PLMNs are available, it can not be ensured for the UE, in the prior art, to select a previous LTE PLMN registered when the CSFB service was initiated, and if the UE reselects an LTE network of other PLMNs, the data service suspended in the LTE PLMN registered before the CSFB service is triggered can not be recovered, which causing a termination of the on-going data service, and at the same time, causing an unnecessary inter-PLMN switch, thereby affecting service experience of a user.

### SUMMARY

A method and device for selecting an LTE network are provided in embodiments of the present invention, which makes that a UE can return to an LTE PLMN registered when a CSFB is initiated after the CSFB service ends, thereby ensuring the continuity of a PS service, avoiding an unnecessary inter-PLMN switch, and improving service efficiency and promoting user experience.

To achieve the aforementioned objectives, the following technical solutions are adopted in the embodiments of the present invention.

In the first aspect of the present invention, a method for selecting an LTE network is provided, comprising: performing, by a user equipment UE, a combined registration in an LTE Public Land Mobile Network PLMN; initiating, by the UE, a Circuit Switched Fallback CSFB service to fall back to a 2G/3G network; receiving, by the UE, an equivalent PLMN list in the 2G/3G network; adding, by the UE, identity information of the LTE PLMN to the equivalent PLMN list; and performing, by the UE, a PLMN selection according to the equivalent PLMN list when the CSFB service ends.

In combination with the first aspect of the present invention, in a probable way of implementation, the performing a PLMN selection according to the equivalent PLMN list comprises: selecting the LTE PLMN in priority according to the equivalent PLMN list.

In combination with the first aspect of the present invention and the aforementioned probable ways of implementation, in another probable way of implementation, the selecting the LTE PLMN in priority comprises: selecting, according to the equivalent PLMN list, a cell on a frequency band corresponding to LTE frequency band information; and selecting the LTE PLMN in priority from available PLMNs for the cell; wherein, the LTE frequency band information is information of an LTE frequency band selected by the UE when the UE initiates a combined registration to the LTE PLMN.

In combination with the first aspect of the present invention and the aforementioned probable ways of implementation, in another probable way of implementation, the selecting the LTE PLMN in priority comprises: selecting, according to the equivalent PLMN list, a cell on a frequency band corresponding to LTE frequency band information; and selecting the LTE PLMN in priority from available PLMNs for the cell; wherein, the LTE frequency band information is received from the 2G/3G network by the UE.

In the second aspect of the present invention, a method for selecting an LTE network is provided, comprising: performing, by a user equipment UE, a combined registration in an LTE Public Land Mobile Network PLMN; performing, by the UE, a PLMN selection on a frequency band corresponding to LTE frequency band information when a Circuit Switched Fallback CSFB service ends, wherein, the LTE frequency band information is information of an LTE frequency band selected by the UE when the UE initiates a combined registration to the LTE PLMN.

In combination with the second aspect of the present invention, in a probable way of implementation, the performing, by the UE, a PLMN selection on the frequency band corresponding to the LTE frequency band information, comprises: selecting, by the UE, a cell on the frequency band corresponding to the LTE frequency band information; and selecting the LTE PLMN in priority from available PLMNs for the cell.

In combination with the second aspect of the present invention and the aforementioned probable ways of implementation, in another probable way of implementation, the method further comprises: storing the LTE frequency band information when the UE initiates the CSFB service and falls back to a circuit domain.

In the third aspect of the present invention, a method for selecting an LTE network is provided, comprising: receiving, by a 2G/3G base station, a connection release message sent by a serving Mobile Switching Centre/Visitors Location Register MSC/VLR, wherein, the connection release message comprises identity information of an LTE Public Land Mobile Network PLMN registered when a user equipment UE initiates a CSFB service, and the 2G/3G base station is a base station which provides a service for the CSFB service; selecting, by the 2G/3G base station, target frequency band information according to the identity information of the LTE PLMN; and sending the target frequency band information to the UE, wherein, the target frequency band information is used for indicating the UE to select a cell for residing on a frequency band corresponding to the target frequency band information.

In combination with the third aspect of the present invention, in a probable way of implementation, the sending the target frequency band information to the UE comprises: sending priority information to the UE, wherein, the priority information comprises the frequency band information.

In the fourth aspect of the present invention, a method for selecting an LTE network is provided, comprising: receiving, by an LTE base station, a connection establishment request message sent by the UE when a Circuit Switched Fallback CSFB service ends, wherein, the connection establishment request message comprises an identity of the UE; and selecting, by the LTE base station, in accordance with the identity of the UE and identity information of an LTE Public Land Mobile Network PLMN registered when the UE initiates the CSFB service, the LTE PLMN corresponding to the identity information of the LTE PLMN.

In combination with the fourth aspect of the present invention, in a probable way of implementation, the method further comprises: receiving and storing, by the LTE base station, the identity of the UE and the identity information of the LTE PLMN, which are sent by a 2G/3G base station, wherein, the 2G/3G base station is a base station which provides service for the CSFB service.

In combination with the fourth aspect of the present invention and the aforementioned probable ways of implementation, in another probable way of implementation, before receiving, by the LTE base station, the identity of the UE and the identity information of the LTE PLMN, which are sent by the 2G/3G base station, the method further comprises: receiving, by the 2G/3G base station, a connection release message sent by a serving Mobile Switching Centre/Visitors Location Register MSC/VLR, wherein, the connection release message comprises the identity of the UE and the identity information of the LTE PLMN; sending, by the 2G/3G base station, the identity of the UE and the identity information of the LTE PLMN to the LTE base station.

In combination with the fourth aspect of the present invention and the aforementioned probable ways of implementation, in another probable way of implementation, if the serving MSC/VLR is a registered MSC/VLR of the UE, the identity of the UE and the identity information of the LTE PLMN are acquired, by the serving MSC/VLR, from registration information of the UE; or, if the serving MSC/VLR is not a registered MSC/VLR of the UE, the identity of the UE and the identity information of the LTE PLMN are acquired, by the serving MSC/VLR, from the registered MSC/VLR of the UE.

In combination with the fourth aspect of the present invention and the aforementioned probable ways of implementation, in another probable way of implementation, the LTE base station is a base station which provides an access service when the UE initiates the CSFB service, and the method further comprises: storing, by the LTE base station, the identity of the UE and the identity information of the LTE PLMN when the UE initiates the CSFB service in the LTE PLMN.

In combination with the fourth aspect of the present invention and the aforementioned probable ways of implementation, in another probable way of implementation, the method further comprises: deleting, by the LTE base station, the stored identity of the UE and the identity information of the LTE PLMN.

In the fifth aspect of the present invention, a user equipment UE is provided, comprising: a receiver, configured to receive an equivalent PLMN list from a 2nd generation/3rd generation 2G/3G network when the UE performs a combined registration in a Long Term Evolution LTE Public Land Mobile Network PLMN, initiates a Circuit Switched Fallback CSFB service and falls back to the 2G/3G network; and a processor, configured to add identity information of the LTE PLMN to the equivalent PLMN list received by the receiver, and perform, according to the equivalent PLMN list, a PLMN selection when the CSFB service ends.

In combination with the fifth aspect of the present invention, in a probable way of implementation, the processor is configured to: select the LTE PLMN in priority according to the equivalent PLMN list.

In combination with the fifth aspect of the present invention and the aforementioned probable ways of implementation, in another probable way of implementation, the processor is configured to: select, according to the equivalent PLMN list, a cell on a frequency band corresponding to LTE frequency band information; and select the LTE PLMN in priority from available PLMNs for the cell; wherein, the LTE frequency band information is information of an LTE frequency band selected by the UE when the UE initiates a combined registration to the LTE PLMN.

In combination with the fifth aspect of the present invention and the aforementioned probable ways of implementation, in another probable way of implementation, the processor is configured to: select, according to the equivalent PLMN list, a cell on a frequency band corresponding to LTE frequency band information; and select the LTE PLMN in priority from available PLMNs for the cell; wherein, the LTE frequency band information is received, by the UE, from the 2G/3G network.

In the sixth aspect of the present invention, a user equipment UE is provided, comprising: a transceiver, configured to interact with a network device to perform a combined registration in an LTE Public Land Mobile Network PLMN; and a processor, configured to perform a PLMN selection on a frequency band corresponding to LTE frequency band information when a Circuit Switched Fallback CSFB service ends, wherein, the LTE frequency band information is information of an LTE frequency band selected by the UE when the UE initiates a combined registration to the LTE PLMN.

In combination with the sixth aspect of the present invention, in a probable way of implementation, the processor is configured to: select a cell on the frequency band corresponding to the LTE frequency band information, and select the LTE PLMN in priority from available PLMNs for the cell.

In combination with the sixth aspect of the present invention and the aforementioned probable ways of implementation, in another probable way of implementation, the UE further comprising: a storage, configured to store the LTE frequency band information when the transceiver initiates the CSFB service to fall back to a circuit domain, wherein the processor is also configured to acquire the LTE frequency band information from the storage when the Circuit Switched Fallback CSFB service ends.

In the seventh aspect of the present invention, a 2G/3G base station is provided, configured to provide service for a Circuit Switched Fallback CSFB service, comprising: a receiver, configured to receive a connection release message sent by a serving Mobile Switching Centre/Visitors Location Register MSC/VLR, wherein, the connection release message comprises identity information of an LTE Public Land Mobile Network PLMN registered when a user equipment UE initiates a CSFB service; a processor, configured to select, according to the identity information of the LTE PLMN which is received by the receiver, target frequency band information, wherein, the target frequency band information is used for indicating the UE to select a cell for residing on a frequency band corresponding to the target frequency band information; a transmitter, configured to send the target frequency band information selected by the processor to the UE.

In combination with the seventh aspect of the present invention, in a probable way of implementation, the transmitter is configured to: send priority information to the UE, wherein, the priority information comprises the frequency band information.

In the eighth aspect of the present invention, a Long Term Evolution LTE base station, comprising: a receiver, configured to receive a connection establishment request message sent by a user equipment UE when a Circuit Switched Fallback CSFB service ends, wherein, the connection establishment request message comprises an identity of the UE; and a processor, configured to select, according to the identity of the UE and identity information of the LTE Public Land Mobile Network PLMN registered when the UE initiates the CSFB service, the LTE PLMN corresponding to the identity information of the LTE PLMN.

In combination with the eighth aspect of the present invention, in a probable way of implementation, the LTE base station further comprises: a storage, wherein the receiver is further configured to receive the identity of the UE and the identity information of the LTE PLMN, which are sent by a 2G/3G base station, wherein, the 2G/3G base station is a base station which provides service for the CSFB service; and the storage is configured to store the identity of the UE and the identity information of the LTE PLMN, which are sent by the 2G/3G base station and received by the receiver.

In combination with the eighth aspect of the present invention and the aforementioned probable ways of implementation, in another probable way of implementation, the LTE base station further comprises: a transmitter, wherein the receiver is further configured to receive a connection release message sent by a serving Mobile Switching Centre/Visitors Location Register MSC/VLR, wherein, the connection release message comprises an identity of the UE and identity information of the LTE PLMN and the transmitter is further configured to send the identity of the UE and the identity information of the LTE PLMN to the LTE base station.

In combination with the eighth aspect of the present invention and the aforementioned probable ways of implementation, in another probable way of implementation, when the serving Mobile Switching Centre/Visitors Location Register MSC/VLR is a registered MSC/VLR of the UE, the identity of the UE and the identity information of the LTE PLMN is acquired from a registration information of the UE by the serving MSC/VLR; or, when the serving MSC/VLR is not a registered MSC/VLR of the UE, the identity of the UE and the identity information of the LTE PLMN is acquired from the registered MSC/VLR by the serving MSC/VLR.

In combination with the eighth aspect of the present invention and the aforementioned probable ways of implementation, in another probable way of implementation, the LTE base station is a base station which provides access service when the UE initiates the CSFB service; and the LTE base station further comprises: a storage, configured to store the identity of the UE and the identity information of the LTE PLMN when the UE initiates the CSFB service in the LTE PLMN.

In combination with the eighth aspect of the present invention and the aforementioned probable ways of implementation, in another probable way of implementation, the processor is further configured to delete the stored identity of the UE and the identity information of the LTE PLMN.

In the ninth aspect of the present invention, a user equipment UE is provided, comprising: a registering unit, configured to perform a combined registration in a Long Term Evolution LTE Public Land Mobile Network PLMN; a fallback unit, configured to initiate a Circuit Switched Fallback CSFB service to fall back to a 2nd generation/3rd generation 2G/3G network; a receiving unit, configured to receive an equivalent PLMN list in the 2G/3G network; an adding unit, configured to add identity information of the LTE PLMN to the equivalent PLMN list received by the receiving unit; and a selecting unit, configured to perform, according to the equivalent PLMN list modified by the adding unit, a PLMN selection when the CSFB service ends.

In combination with the ninth aspect of the present invention, in a probable way of implementation, the selecting unit is configured to: select, according to the equivalent PLMN list modified by the adding unit, the LTE PLMN in priority.

In combination with the ninth aspect of the present invention and the aforementioned probable ways of implementation, in another probable way of implementation, the selecting unit is configured to: select, according to the equivalent PLMN list modified by the adding unit, a cell on a frequency band corresponding to LTE frequency band information; and select the LTE PLMN in priority from available PLMNs for the cell; wherein, the LTE frequency band information is information of an LTE frequency band selected by the UE when the UE initiates a combined registration to the LTE PLMN.

In combination with the ninth aspect of the present invention and the aforementioned probable ways of implementation, in another probable way of implementation, the selecting unit is specifically configured to: select, according to the equivalent PLMN list modified by the adding unit, a cell on a frequency band corresponding to LTE frequency band information; and select the LTE PLMN in priority from available PLMNs for the cell; wherein, the LTE frequency band information is received from the 2G/3G network by the UE.

In the tenth aspect of the present invention, a user equipment UE is provided, comprising: a registering unit, configured to perform a combined registration in a Long Term Evolution LTE Public Land Mobile Network PLMN; a selecting unit, configured to perform a PLMN selection on a frequency band corresponding to LTE frequency band information when a Circuit Switched Fallback CSFB service ends, wherein, the LTE frequency band information is information of an LTE frequency band selected by the UE when the UE initiates a combined registration to the LTE PLMN.

In combination with the tenth aspect of the present invention, in a probable way of implementation, the selecting unit is configured to: select a cell on the frequency corresponding to the LTE frequency information, and select the LTE PLMN in priority from available PLMNs for the cell.

In combination with the tenth aspect of the present invention and the aforementioned probable ways of implementation, in another probable way of implementation, the UE further comprises: a storing unit, configured to store the LTE frequency band information when the CSFB service is initiated the and a CS domain is fallen back to, wherein the selecting unit is further configured to acquire the LTE frequency information from the storing unit when the Circuit Switched Fallback CSFB service ends.

In the eleventh aspect of the present invention, a 2G/3G base station is provided, configured to provide service for a Circuit Switched Fallback CSFB service. The 2G/3G base station comprises: a receiving unit, configured to receive a connection release message sent by a serving Mobile Switching Centre/Visitors Location Register MSC/VLR, wherein the connection release message comprises identity information of an LTE Public Land Mobile Network PLMN registered when a user equipment UE initiates a CSFB service; a selecting unit, configured to select, according to the identity information of the LTE PLMN which is received by the receiving unit, target frequency band information, wherein the target frequency band information is configured to indicate the UE to select a cell for residing on a frequency band corresponding to the target frequency band information; and a sending unit, configured to send the target frequency band information selected by the selecting unit to the UE.

In combination with the eleventh aspect of the present invention, in a probable way of implementation, the sending unit is configured to: send priority information to the UE, wherein the priority information comprises the frequency band information.

In the twelfth aspect of the present invention, a Long Term Evolution LTE base station, comprising: a receiving unit, configured to receive a connection establishment request message sent by a user equipment UE when a Circuit Switched Fallback CSFB service ends, wherein, the connection establishment request message comprises an identity of the UE; a selecting unit, configured to select, according to the identity of the UE and identity information of LTE Public Land Mobile Network PLMN registered when the UE initiates the CSFB service, which are received by the receiving unit, the LTE PLMN corresponding to the identity information of the LTE PLMN.

In combination with the twelfth aspect of the present invention, in a probable way of implementation, the receiving unit is configured to: receive and store the identity of the UE and the identity information of the LTE PLMN, which are sent by a 2G/3G base station, wherein, the 2G/3G base station is a base station which provides a service for the CSFB service.

In combination with the twelfth aspect of the present invention and the aforementioned probable ways of implementation, in another probable way of implementation, the receiving unit is further configured to: before receiving the identity of the UE and the identity information of the LTE PLMN sent by a 2G/3G base station, receive, by the 2G/3G base station, a connection release message sent a serving Mobile Switching Centre/Visitors Location Register MSC/VLR, wherein the connection release message comprises the identity of the UE and the identity information of the LTE PLMN and the 2G/3G base station sends the identity of the UE and the identity information of the LTE PLMN to the 2G/3G base station.

In combination with the twelfth aspect of the present invention and the aforementioned probable ways of implementation, in another probable way of implementation, when the serving Mobile Switching Centre/Visitors Location Register MSC/VLR is a registered MSC/VLR of the UE, the identity of the UE and the identity information of the LTE PLMN is acquired from a registration information of the UE by the serving MSC/VLR; or, when the serving MSC/VLR is not a registered MSC/VLR of the UE, the identity of the UE and the identity information of the LTE PLMN is acquired from the registered MSC/VLR by the serving MSC/VLR.

In combination with the twelfth aspect of the present invention and the aforementioned probable ways of implementation, in another probable way of implementation, the LTE base station is a base station which provides an access service when the UE initiates the CSFB service; and the LTE base station further comprises: a storing unit, configured to save the identity of the UE and the identity information of the LTE PLMN when the UE initiates the CSFB service in the LTE PLMN.

In combination with the twelfth aspect of the present invention and the aforementioned probable ways of implementation, in another probable way of implementation, the LTE base station further comprises: a deleting unit, configured to delete the stored identity of the UE and the identity information of the LTE PLMN.

Compared with a method in the prior art, which randomly assigns a UE to return to any of a neighboring LTE network, a method and device for selecting an LTE network, provided in embodiments in the present invention, which comprises when a UE initiates a connection establishment request to an LTE network after a CSFB service ends, determining, by matching an identity sent by the UE with the stored identity of the UE, an LTE PLMN registered by the UE when the UE initiates the CSFB, can assign the UE to return to the LTE PLMN registered when the CSFB is initiated, which not only reduces an unnecessary inter-PLMN switch, but also recovers a data service suspended in the previously registered LTE PLMN, thereby improving service efficiency and promoting user experience.

### BRIEF DESCRIPTION OF THE DRAWINGS

In order to illustrate the technical solution in the embodiments of the present invention or the prior art more clearly, a brief description to the drawings required in the embodiments or the prior art will be made below. Apparently, the drawings described below are merely some embodiments of the present invention, and other drawings could be achieved based on these drawings by those of ordinary skill in the art without creative efforts.
Fig. 1 is a flowchart of a method for selecting an LTE network in an embodiment of the present invention;
Fig. 2 is a flowchart of a method for selecting an LTE network in another embodiment of the present invention;
Fig. 3 is a flowchart of a method for selecting an LTE network in another embodiment of the present invention;
Fig. 4 is a flowchart of a method for selecting an LTE network in another embodiment of the present invention;
Fig. 5 is a flowchart of a method for selecting an LTE network in another embodiment of the present invention;
Fig. 6 is a flowchart of a method for selecting an LTE network in another embodiment of the present invention;
Fig. 7 is a schematic view of a composition of a UE in another embodiment of the present invention;
Fig. 8 is a schematic view of a composition of a UE in another embodiment of the present invention;
Fig. 9 is a schematic view of a composition of a 2G/3G base station in another embodiment of the present invention;
Fig. 10 is a schematic view of a composition of an LTE base station in another embodiment of the present invention;
Fig. 11 is a schematic view of a composition of a UE in another embodiment of the present invention;
Fig. 12 is a schematic view of a composition of a UE in another embodiment of the present invention;
Fig. 13 is a schematic view of a composition of a 2G/3G base station in another embodiment of the present invention;
Fig. 14 is a schematic view of a composition of an LTE base station in another embodiment of the present invention.

### DESCRIPTION OF EMBODIMENTS

A clear and complete description of technical solutions of the embodiments of the present invention will be given below, in combination with the accompanying drawings in the embodiments of the present invention. Apparently, the embodiments described below are just a part, but not all, of the embodiments of the present invention. All of other embodiments, obtained by those skilled in the art based on the embodiments of the present invention without any inventive efforts, fall into the protection scope of the present invention.

In the specification, an LTE network described is an Evolved UMTS Territorial Radio Access Network (an English full name is Evolved UMTS Territorial Radio Access Network, and an English abbreviation is E-UTRAN, wherein, a Chinese full name of UMTS is Universal Mobile Telecommunications System, and an English full name is Universal Mobile Telecommunications System). A 2nd Generation (2nd Generation, 2G) network is a GSM/EDGE Radio Access Network (an English full name is GSM/EDGE Radio Access Network, an English abbreviation is GERAN, wherein, a Chinese full name of GSM is Global System of Mobile communication, an English full name is Global System of Mobile communication, a Chinese full name of EDGE is Enhanced Data Rate for GSM Evolution technology, and an English full name is Enhanced Data Rate for GSM Evolution). A 3rd Generation (3rd Generation, 3G) network is UTRAN network. A PLMN of an LTE network only provides a PS domain service, while in a 2G/3G network, not only a PLMN providing a CS domain service but also a PLMN providing PS domain service are included.

In an embodiment of the present invention, a user equipment (User Equipment, UE for short) may be any of the following ones, and the UE may be static or mobile. A Static UE may include a terminal (Terminal), a mobile station (Mobile Station), a subscriber unit (Subscriber Unit), a station (Station) or the like. A Mobile UE may include a cellular phone (Cellular Phone), a personal digital assistant (Personal Digital Assistant, PDA), a wireless modem (modem), a wireless communication device, a handheld device (handheld), a laptop computer (Laptop Computer), a cordless phone (Cordless Phone), a wireless local loop (Wireless Local Loop, WLL) station or the like. The aforementioned UE may be distributed in a whole wireless network.

In order to facilitate the understanding for those skilled in the art, specific application examples are illustrated below. It shall be noted that, in an embodiment of the present invention, an LTE base station may be a base station which provides an access service of an LTE network, such as eNodeB. A 2nd generation/3rd generation 2G/3G base station may be a base station (Base Station Subsystem, BSS) in a 2G network, or a radio network subsystem (Radio Network Subsystem, RNS) in a 3G network. A mobile management network element may be any one of a Mobile Switching Centre (Mobile Switching Centre, MSC)/Visitors Location Register (Visitors Location Register, VLR), or a Mobility Management Entity (Mobility Management Entity, MME), or a Serving GPRS Support Node (Serving GPRS Support Node, SGSN), wherein a MSC and a VLR are generally combined as an identical network element, which is named as MSC/VLR or VLR for short.

Since an LTE network only supports a PS data service, a UE needs to perform a Circuit Domain Fall Back (Circuit Service Fall Back, CSFB) flow to make the UE fall back from the LTE network to a 2G/3G network if the UE initiates or receives a circuit domain service (including a voice call, a supplementary service, a location service or the like) while performing data service or in an idle state in the LTE network, in order that the UE completes a circuit domain service in the 2G/3G network. When a CS service ends (a release of an underlying connection established by the UE in a 2G/3G network due to a CSFB service means the end of a circuit domain service), a terminal needs to return to an LTE network to go on with a data service in the LTE network. In an embodiment of the present invention, a CSFB service specifically refers to a CS service performed by a UE which resides in an LTE network when the UE initiating a CSFB flow and falling back to a 2G/3G network as a circuit domain CS service needs to be performed, and the CSFB service includes an uplink CSFB service and a downlink CSFB service, such as a downlink CSFB service triggered when a UE receives a voice call paging, an uplink CSFB service triggered by an active voice call or the like. In an embodiment of the present invention, a source MSC/VLR is an MSC/VLR to which the UE is successfully registered in a combined registration flow, which is also a serving MSC/VLR of the UE when residing in a LTE network after a successful combined registration and which is also called as a registered MSC/VLR. A serving MSC/VLR is an MSC/VLR which provides a service for a UE to perform a CS service when the UE initiates a CSFB flow and falls back to a 2G/3G network, which is also called as a target MSC/VLR.

In an inner part of a UE, the inner part of the UE may be divided into an access stratum (Access Stratum, AS) and a non-access stratum (Non-Access Stratum, NAS) according to differences of objects of message which are processed and controlled. The AS is responsible for receiving an RR/RRC connection release message, selecting, according to a frequency band, a suitable cell and residing, reading the cell system broadcast message, acquiring available PLMN information and then reporting it to the NAS. The NAS determines whether to perform a PLMN selection according to the available PLMN information reported by the AS.

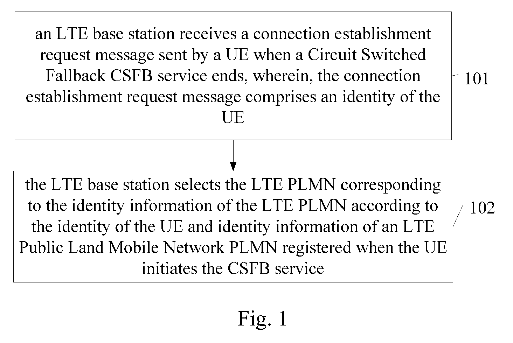

A method for selecting an LTE network is provided in an embodiment of the present invention. As shown in Fig. 1, the method comprises the following steps.

101, an LTE base station receives a connection establishment request message sent by a UE when a Circuit Switched Fallback CSFB service ends, and the connection establishment request message comprises an identity of the UE.

Alternatively, an LTE base station provides an LTE access service for the UE. The UE registers to an LTE base station when a CSFB is initiated. When UE initiates a CSFB, an LTE base station may store an identity of the UE and identity information of an LTE PLMN registered by the UE, so that when the CSFB service of the UE ends and when a connection establishment request message sent by the UE, which includes the identity of the UE, is received, the LTE PLMN registered when the CSFB is initiated is selected for the UE according to the identity of the UE and the stored identity information of the LTE PLMN registered when the UE initiates the CSFB service.

Alternatively, when a CSFB service initiated by a UE ends, a serving MSC/VLR may send an identity of the UE and identity information of an LTE PLMN registered by the UE to a 2G/3G base station which provides an access service in CS domain for the UE, so that the 2G/3G base station transmits the identity of the UE and the identity information of the LTE PLMN registered by the UE to neighboring LTE base stations capable of providing an LTE access service for the UE when the CSFB service ends. These neighboring base stations include the LTE base station registered when the UE initiates the CSFB. The LTE base station stores the identity of the UE and the identity information of the LTE PLMN registered by the UE, which are sent by the 2G/3G base station. In this way, when an LTE base station receives the connection establishment request message sent by the UE, which includes the identity of the UE, the LTE PLMN registered when the CSFB is initiated may be selected for the UE according to the identity of the UE and the stored identity information of the LTE PLMN registered by the UE. The 2G/3G base station may obtain in advance a base station which is adjacent to the 2G/3G base station and which may provide an LTE access service, for example, obtaining a neighboring eNodeB based on network configuration or using an automatic neighbor relation, and the identity of the UE and the identity information of the LTE PLMN may be sent to each neighboring base station which provides an LTE access service. Since a CSFB is initiated, by a UE, when an LTE service is performed in an LTE base station, a nearby 2G/3G base station, which is capable of providing CS domain, would be selected, and thereby the LTE base station previously registered by the UE is adjacent to the 2G/3G base station which performs the CSFB service. The LTE base station receives and stores the identity of the UE and the identity information of the LTE PLMN, which are sent by the 2G/3G base station. In this way, when the UE searches a suitable cell to return to an LTE network, an LTE base station may determine and select the identity information of the LTE PLMN when the UE initiates the CSFB service if the UE enters a service area of the LTE base station.

It shall be noted that, if the serving MSC/VLR is a registered MSC/VLR of the UE, the serving MSC/VLR acquires an identity of the UE and identity information of the LTE PLMN registered by the UE from registration information of the UE. If the serving MSC/VLR is not a registered MSC/VLR of the UE, the serving MSC/VLR acquires an identity of the UE and identity information of the LTE PLMN registered by the UE from a registered MSC/VLR of the UE.

An identity of the UE may be a System Architecture Evolution (System Architecture Evolution, SAE) Temporary Mobile Subscriber Identity (SAE Temporary Mobile Subscriber Identity, S-TMSI), an International Mobile Subscriber Identity (International Mobile Subscriber Identity, IMSI) or Temporary Mobile Subscriber Identity (Temporary Mobile Subscriber Identity, TMSI), which is not limited in an embodiment of the present invention. Identity information of the LTE PLMN registered by the UE may be a registered LTE PLMN identity (identity, ID); it may also be a Globally Unique Temporary Identity (Globally Unique Temporary Identity, GUTI) including a registered LTE PLMN ID; it may also be a Tracking Area Identity (Tracking Area Identity, TAI) including registered LTE PLMN ID; and it may also be an E-UTRAN Cell Global Identity (E-UTRAN Cell Global Identity, ECGI) including a registered LTE PLMN ID, which is not limited in an embodiment of the present invention.

Wherein, the connection establishment request message is sent when the CSFB service initiated by the UE ends. An LTE base station may be a base station which provides an LTE access service, such as an eNodeB. An LTE base station may be shared by at least two LTE PLMNs, that is to say, an LTE base station may provide LTE access services for at least two LTE PLMNs, for example, an LTE base station may provide an LTE access service for both PLMN1 and PLMN2.

102, the LTE base station selects the LTE PLMN corresponding to the identity information of the LTE PLMN according to the identity of the UE and identity information of an LTE Public Land Mobile Network PLMN registered when the UE initiates the CSFB service.

Since the LTE base station may obtain the identity of the UE and the identity information of the LTE PLMN, a match may be performed according to a received UE identity which is sent by the UE and a stored UE identity to determine the identity information of the LTE PLMN corresponding to the UE identity. The LTE base station may uniquely determine, according to the identity information of the LTE PLMN, the corresponding LTE PLMN and select the LTE PLMN to provide an LTE service for the UE.

Compared with a method, defined in the prior art, for returning to an LTE network after the CSFB, a method for selecting an LTE network, which is provided in an embodiment of the present invention, comprising when a UE initiates a connection establishment request to an LTE network when a CSFB service ends, determining and selecting, by matching the UE identity sent by the UE with the stored identity of the UE, an LTE PLMN registered when the UE initiates the CSFB and selecting, can ensure that the UE returns to the LTE PLMN registered when the CSFB is initiated, which not only reduces an unnecessary inter-PLMN switch, but also recovers a data service suspended in the previously registered LTE PLMN, thereby improving the service efficiency and promoting the user experience.

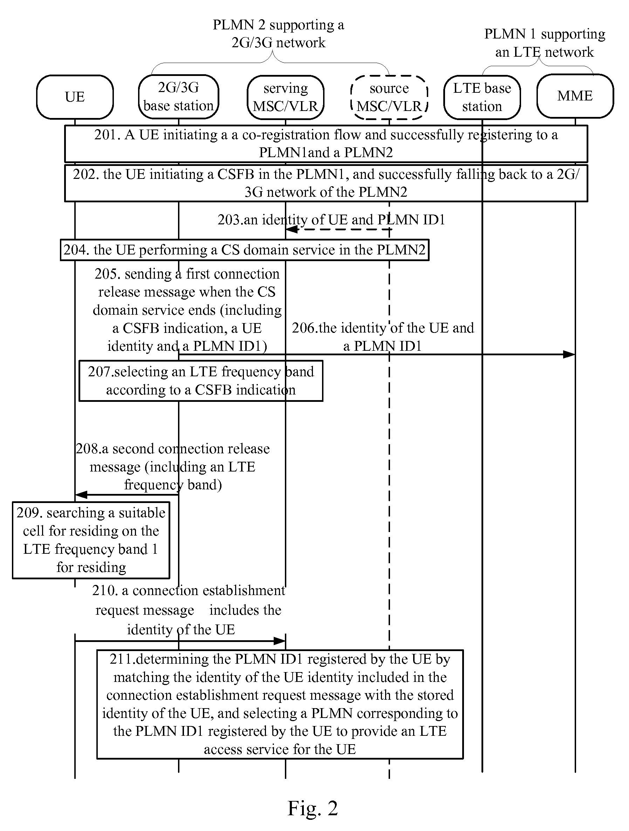

Another method for selecting an LTE network is provided in an embodiment of the present invention. As shown in Fig. 2, the method comprises:
201, A UE initiates a combined registration and is successfully registered to a PLMN1 supporting an LTE network and a PLMN2 supporting a 2G/3G network.

The UE which resides in an E-UTRAN and supports a CSFB needs to initiate a combined registration flow to realize a simultaneous registration to a PS domain of an EPC network and a CS domain of a 2G/3G network. When the UE is registered to a PS domain network (LTE PLMN1), a source MSC/VLR in PLMN2 may acquire the identity of the UE and the PLMN ID 1 of the PLMN1.

In a combined registration flow, a network side selects the source MSC/VLR for the UE. When the UE is registered to the CS domain network (CS PLMN2), a Mobile Management Entity (Mobile Management Entity, MME) selects a source MSC/VLR which is capable of providing service for the UE and sends a location update request to the selected source MSC/VLR to establish an SGs association. The source MSC/VLR sends a registration request to a Home Location Register (Home Location Register, HLR) and acquires CS domain subscription data of the UE to realize a registration of the UE in a CS domain. Alternatively, under a scenario that an MSC resource pool (MSC pool) is not deployed, an MME selects a servable MSC/VLR according to current location information of the UE; under a scenario that an MSC resource pool (MSC pool) is deployed, an MME selects a serving MSC/VLR from the MSC pool according to current location information of the UE and an International Mobile Subscriber Identity (International Mobile Subscriber Identity, IMSI) hash table.

202, the UE initiates a CSFB in the PLMN1, and successfully falls back to a 2G/3G network of the PLMN2.

When a combined registration is successfully realized, a CSFB service may be normally initiated. In the flow that a UE initiates an uplink and a downlink CSFB, an MME in an LTE network selects a CS service PLMN ID for the UE and sends the selected CS PLMN ID to an LTE base station (eNodeB) in the LTE network to inform that the LTE base station (eNodeB) should fall the UE back to a CS network corresponding to the CS PLMN ID. A CS domain service may be initiated when the UE switches to the 2G/3G network. For example, in an initiated CS voice call establishment flow, a UE may send a CSFB indication to a serving MSC/VLR. The CSFB indication is used for indicating that this voice call is triggered as a CSFB is performed in the LTE network. When a CS voice call connection is established successfully, a UE performs a voice call.

203, a source MSC/VLR sends an identity of the UE and a PLMN ID1 to a serving MSC/VLR.

The step 203 is an optional step. If a serving MSC/VLR of the UE in a 2G/3G network to which the UE falls back is the source MSC/VLR, the step 203 need not to be performed. Only when a serving MSC/VLR of the UE is not the source MSC/VLR registered in the step 201, the step 203 is performed.

In the combined registration process of the step 201, a source MSC/VLR may acquire an identity of the UE from a registration information. For example, in the combined registration process, an MME will send an International Mobile Subscriber Identity IMSI of the UE to a source MSC/VLR, or an MME may also send a SAE Temporary Mobile Subscriber Identity (SAE Temporary Mobile Subscriber Identity, S-TMSI) of the UE to a source MSC/VLR. Furthermore, a source MSC/VLR may acquire a PLMN ID1 registered by the UE from registration information. For example, in a combined registration process, an MME will send an MME name (name) to a source MSC/VLR, and a PLMN ID1 registered by a UE is included in the MME name. Or, in a combined registration flow, an MME may send a Tracking Area Identity (Tracking Area Identity, TAI) or an E-UTRAN Cell Global Identity (E-UTRAN Cell Global Identity, ECGI) to a source MSC/VLR, and a PLMN ID1 registered by the UE is included in the TAI or the ECGI.

In the embodiment, if the UE enters the service range of another MSC/VLR, i.e., a serving MSC/VLR, when falling back to a 2G/3G network, the UE will report location information of a source MSC/VLR to a serving MSC/VLR during the location update process with the serving MSC/VLR. Then, the serving MSC/VLR sends, according to the location position reported by the UE, a Mobile Application Part (Mobile Application Part, MAP) SEND IDENTIFICATION (SEND IDENTIFICATION) message to the source MSC/VLR on a request to acquire an identity of the UE and a registered PLMN ID1. The source MSC/VLR sends the identity of the UE and the registered PLMN ID1, which are acquired in the step 201, to the serving MSC/VLR in an MAP SEND IDENTIFICATION response message.

204, the UE performs a CS domain service in the PLMN2.

A CS domain service after the CSFB may include initiating or receiving a voice call, a supplementary service, a location service or the like.

205, when the CS domain service of the UE ends, a serving MSC/VLR sends a first connection release message to a 2G/3G base station, and the first connection release message includes a CSFB indication, a UE identity and a PLMN ID1, that is to say, the 2G/3G base station obtains that the CSFB service of the UE ends.

When a CS domain service of a UE ends, a serving MSC/VLR initiates a connection release flow to a base station, and a CSFB indication, a UE identity and a PLMN ID1 are carried in a first connection release message. The CSFB indication is used for indicating that a current CS domain service of a UE is caused by a CSFB, and when the CS domain service ends, the UE needs to be redirected to return to an LTE network.

A UE identity sent from a serving MSC/VLR to a 2G/3G base station may be a SAE Temporary Mobile Subscriber Identity S-TMSI, an International Mobile Subscriber Identity IMSI or a Temporary Mobile Subscriber Identity (Temporary Mobile Subscriber Identity, TMSI) of a UE, which is not limited in an embodiment of the present invention. Identity information of a registered LTE PLMN, which is sent from a serving MSC/VLR to a 2G/3G base station, may be a registered LTE PLMN identity (identity, ID); it may also be a Globally Unique Temporary Identity (Globally Unique Temporary Identity, GUTI) which includes a registered LTE PLMN ID; it may also be a Tracking Area Identity (Tracking Area Identity, TAI) which includes a registered LTE PLMN ID; it may also includes an E-UTRAN Cell Global Identity (E-UTRAN Cell Global Identity, ECGI) which includes a registered LTE PLMN ID. In the embodiment, it is only taken as an example that identity information of a registered LTE PLMN is a PLMN ID1, and the identity information of a registered LTE PLMN in other forms will not be described redundantly in an embodiment of the present invention.

206, the 2G/3G base station sends the identity of the UE and the PLMN ID1 to neighboring base stations which provide LTE access services, and the neighboring base stations which provide LTE access services include the LTE base station which provides an LTE access service for the UE when the UE initiates the CSFB.

For example, the 2G/3G base station may send the acquired identity of the UE and the registered LTE PLMN ID1 to the neighboring base stations which provide LTE access services through a flow of Radio Access Network Information Management (RAN Information Management, RIM), and the LTE base stations store the received identity of the UE and PLMN ID1. The 2G/3G base station may obtain the neighboring base stations which provide LTE access services through configuration of a network management system, and may also discover the neighboring base stations which provide LTE access services through an automatic neighbour discovery flow.

Furthermore, in order to avoid occupying excessive storage resources of an LTE base station, the identity of the UE and the identity information of the LTE PLMN registered by the UE may not be permanently stored. Alternatively, when an LTE base station obtains that a UE initiates a CSFB flow, a timer may be started. When the timer expires, the stored identity of the UE and LTE PLMN ID1 registered by the UE are deleted, wherein, the timing of the timer may be preset according to factors such as a size of storage space and a degree of service busy of an LTE base station, a priority of a UE and the like, which is not limited in the present invention. Or, the stored identity of the UE and LTE PLMN ID1 registered by the UE may also be deleted by adopting other trigger conditions, for example, when a stored identity of a UE and identity information of an LTE PLMN registered by UE reach a certain capacity or reach a certain quantity, an earliest stored identity of a UE and identity information of LTE PLMN registered by a UE are deleted until the capacity or quantity of stored identities of the UE and identity information of LTE PLMN are lower than or equal to a stored preset capacity or quantity.

207, the 2G/3G base station selects LTE frequency band (Frequency) information according to a CSFB indication.

It belongs to the prior art that a 2G/3G base station selects an LTE frequency band for the UE when a first connection release message is received. The determined LTE frequency band information may be LTE frequency band information supported by a registered LTE PLMN; or it may be LTE frequency band information corresponding to the PLMN2; or it may also be LTE frequency band information supported by other PLMNs, which will not introduced in details in an embodiment of the present invention.

208, the 2G/3G base station sends a second connection release message to the UE, wherein, the second connection release message comprises the LTE frequency information selected in the step 207.

The first connection release message and the second connection release message involved in the specification of the application may be a Radio Resource (RR) connection release (release) message, or a Radio Resource Control (Radio Resource Control, RRC) connection release message, or other messages which are used for assisting the release of a radio resource. If a 2G/3G base station is a BSS, the BSS sends an RR connection release message to a UE. An RR connection release message includes a redirection indication, which is used for indicating the UE to perform redirection and to return to an LTE network when the UE releases an RR connection. And LTE frequency band information is taken as the content of the redirection indication, for indicating the UE to perform redirection and to return to an LTE network corresponding to an LTE frequency band. If the base station is an RNS, the RNS sends an RRC connection release message to the UE. The RRC connection release message includes a redirection indication for indicating the UE to perform redirection and to return to an LTE network when the UE releases an RRC connection. And LTE frequency band information is taken as the content of the redirection indication, for indicating the UE to perform redirection and to return to an LTE network corresponding to an LTE frequency band.

209, the UE searches a suitable cell (Suitable Cell) on the LTE frequency for residing.

When a current RR/RRC connection is released, a UE searches a suitable cell on an LTE frequency band according to LTE frequency information assigned in a redirection indication, and resides in the suitable cell searched on the LTE frequency band. The suitable cell is a cell where the UE may reside and may acquire a normal service. In a practical application, it may occur that a UE can not acquire the normal services in a searched cell on an LTE frequency band (for example, only an emergency service can be acquired), i.e., it is a non-suitable cell. In this case, the UE may search a suitable cell again on all frequency bands, which is not taken into account in embodiments of the present invention and will not describe redundantly.

It shall be noted that, in this step, a UE probably enters any neighboring base station of the current 2G/3G base station, which provides an LTE access service and which includes an LTE base station when the UE initiates a CSFB previously. For the convenience of description, the LTE base station where the UE initiates a CSFB before entry is taken as an example in this step, as well as steps 210 and 211 below. If the UE enters other neighboring base stations which provide LTE access services, the neighboring base stations perform the same actions as that performed by the LTE base station.

210, the UE sends a connection establishment request message to the LTE base station, and the connection establishment request message includes the identity of the UE.

The identity of the UE may be a System Architecture Evolution (System Architecture Evolution, SAE) Temporary Mobile Subscriber Identity (SAE Temporary Mobile Subscriber Identity, S-TMSI), an International Mobile Subscriber Identity (International Mobile Subscriber Identity, IMSI) or a Temporary Mobile Subscriber Identity (Temporary Mobile Subscriber Identity, TMSI), which is not limited in an embodiment of the present invention.

It shall be noted that, in this step, if the UE enters other neighboring base station which provides an LTE access service, the UE sends the connection establishment request message which includes the identity of the UE to the base station.

211, the LTE base station determines the PLMN ID1 registered by the UE by matching the identity of the UE which is included in the connection establishment request message with the stored identity of the UE, and selects a PLMN corresponding to the PLMN ID1 registered by the UE to provide an LTE access service for the UE.

In order to return to the LTE network to perform a PS service, the UE initiates a joint Tracking Area Updating (Tracking Area Updating, TAU) flow, which may initiate a connection establishment flow in the PLMN1 and recover a suspended data service in the PLMN 1. Through the step 206, the LTE base station has already acquired and stored the identity of the UE and the identity information of the LTE PLMN corresponding to the identity of the UE, which is registered by the UE, as a result, the PLMN ID 1 registered when the UE initiates the CSFB may be queried in this step.

Specifically, the connection establishment request message sent by the UE may also include the identity information of the LTE PLMN, which is selected by the UE. The LTE base station may match the identity of the UE and stored identities of UE, and determine, by comparison, whether the identity information of the LTE PLMN, which is selected by the UE, is the same as the stored identity information of the LTE PLMN registered by the UE. If the two are different, the identity information of the registered LTE PLMN may by replaced, by the LTE base station, with the identity information of the LTE PLMN in the connection establishment request message, and send it to the MME connected with the LTE base station to complete a TAU flow.

The method for selecting an LTE network, which is provided by an embodiment of the present invention, comprising: when a UE initiates a connection establishment request message to an LTE network, an LTE base station determining and selecting, by matching an identity of the UE sent by the UE with a stored identity of the UE, identity information of an LTE PLMN registered by the UE when the UE initiates a CSFB, can ensure that the UE returns to the LTE PLMN registered when the CSFB is initiated, which not only reduces an unnecessary inter-PLMN switch, but also recovers a data service suspended in the previously registered LTE PLMN, thereby improving the service efficiency and promoting the user experience.

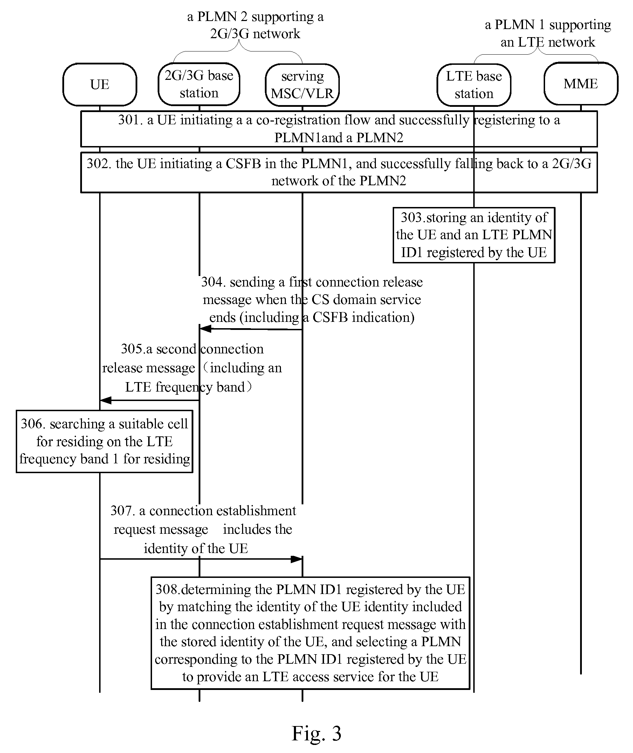

Another method for selecting an LTE network is provided in an embodiment of the present invention. As shown in Fig. 3, the method comprises the following steps.

301, a UE initiates a combined registration and is successfully registered to a PLMN1 supporting an LTE network and a PLMN2 supporting a 2G/3G network.

302, the UE initiates a CSFB in the PLMN1, and successfully falls back to a 2G/3G network of the PLMN2.

Wherein, similar to the embodiment shown in Fig. 2, the steps 301-302 belong to the prior art, and will not described redundantly in details in the embodiment of the present invention.

303, an LTE base station stores an identity of the UE and an LTE PLMN ID1 registered by the UE.

The LTE base station stores the identity of the UE and the identity information of the LTE PLMN registered by the UE in order to select the LTE network registered when the CSFB is initiated for the UE when the UE performs an LTE network selection after a CSFB service. In order to avoid occupying excessive storage resources of an LTE base station, the identity of the UE and the identity information of the LTE PLMN registered by the UE may not be permanently stored. Alternatively, when an LTE base station obtains that UE initiates a CSFB flow, a timer may be started. When the timer expires, the stored identity of the UE and LTE PLMN ID 1 registered by the UE are deleted, wherein, the timing of the timer may be preset according to factors such as a size of storage space and a degree of service busy of an LTE base station, a priority of a UE and the like, which is not limited in the present invention. Or, the stored identity of the UE and LTE PLMN ID 1 registered by the UE may also be deleted by adopting other trigger conditions, for example, when a stored identity of a UE and identity information of an LTE PLMN registered by a UE reach a certain capacity or reach a certain quantity, an earliest stored identity of a UE and identity information of LTE PLMN registered by a UE are deleted until the capacity or quantity of stored identities of the UE and identity information of LTE PLMN are lower than or equal to a stored preset capacity or quantity.

304, when the CSFB service of the UE ends, a serving MSC/VLR sends a first connection release message to the 2G/3G base station, wherein, the first connection release message includes a CSFB indication.

Wherein, the CSFB indication is used for indicating the UE that the CS domain service which ends currently is caused by a CSFB, and when the CS domain service ends, the UE needs to return to an LTE network.

305, the 2G/3G base station sends a second connection release message to the UE, and the second connection release message includes LTE frequency band information.

306, a suitable cell (Suitable Cell) of the LTE base station is searched by the UE on an LTE frequency band for residing.

307, the UE sends a connection establishment request message to the LTE base station, wherein, the connection establishment request message includes the identity of the UE.

In the embodiment, the steps 304-307 belong to the prior art, and will not be described redundantly in details in the embodiment of the present invention.

308, the LTE base station determines the PLMN ID1 registered by the UE by matching the identity of the UE which is included in the connection establishment request message with the stored identity of the UE, and selects a PLMN corresponding to the PLMN ID1 registered by the UE to provide an LTE access service for the UE.

Wherein, the LTE base station may select, according to the stored identity of the UE and identity information of the LTE PLMN registered by the UE in the step 303 and the identity of the UE identity included in the connection establishment request message, a PLMN corresponding to the registered PLMN ID1 for the UE to provide an LTE access service for the UE. The specific way of implementation in the step 308 is similar to the way of implementation in the step 211 in an embodiment corresponding to Fig. 2. The corresponding contents in the step 211 may be referred to and will not be described redundantly in the embodiment of the present invention here.

The method for selecting an LTE network, which is provided in the embodiment of the present invention, comprises that when a CSFB service of a UE ends, a 2G/3G base station sends an identity of the UE and identity information of an LTE PLMN registered by the UE to an LTE base station, so that when the UE initiates a connection establishment request message to an LTE network, the LTE base station may determine, according to the identity of the UE which is sent by the UE, the identity information of the LTE PLMN registered by the UE when the UE initiates the CSFB, can ensure that the UE returns to the LTE PLMN registered when the CSFB is initiated, which not only reduces an unnecessary inter-PLMN switch, but also recovers a data service suspended in the previously registered LTE PLMN, thereby improving service efficiency and promoting user experience.

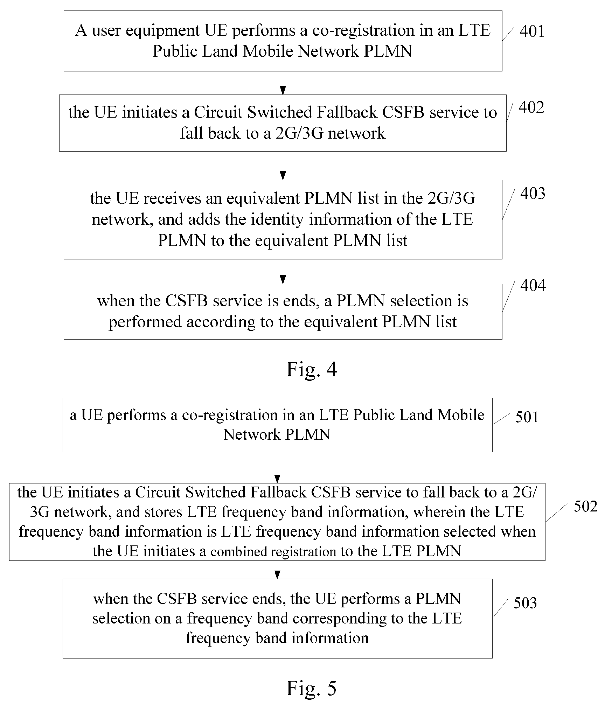

Another method for selecting an LTE network is provided in an embodiment of the present invention. A UE stores identity information of an LTE PLMN registered when a CSFB is initiated, and uses the stored identity information of the LTE PLMN to update an equivalent PLMN list. As shown in Fig. 4, the method comprises the following steps.

401, A user equipment UE performs a combined registration in an LTE Public Land Mobile Network PLMN.

The UE is simultaneously registered to a 2G/3G network and an LTE network. A data service may be performed in the LTE network. When a CS domain service needs to perform, a CSFB flow may be initiated to fall back to the 2G/3G network.

402, the UE initiates a Circuit Switched Fallback CSFB service to fall back to a 2G/3G network.

When the CSFB service is initiated to fall back to the 2G/3G network, the UE may store identity information of the registered LTE PLMN in the step 401. It shall be noted that, if the UE has already saved the identity information of the registered LTE PLMN in the registration flow of the step 401, for example, a Globally Unique Temporary Identity GUTI including registered LTE PLMN ID or a Tracking Area Identity TAI including registered LTE PLMN ID has already been stored, the UE does not need to repeatedly save the identity information of the registered LTE PLMN in this step. In this way, the identity information of the LTE PLMN in the steps 403 and 404 below are the stored identity information of the LTE PLMN in the step 401.

The stored identity information of the registered LTE PLMN may be a registered LTE PLMN identity (identity, ID); it may also be a Tracking Area Identity (Tracking Area Identity, TAI) including registered LTE PLMN ID; and it may also be a Globally Unique Temporary Identity (Globally Unique Temporary Identity, GUTI) including registered LTE PLMN ID.

Alternatively, the UE may store LTE frequency band information selected when the combined registration is initiated to the LTE PLMN in the step 401. An LTE frequency band corresponding to the LTE frequency band information is an LTE frequency band selected when the CSFB is initiated in this step. It shall be noted that, the registered LTE PLMN in the step 401 may support several LTE frequency bands.

403, the UE receives an equivalent PLMN list in the 2G/3G network, and adds the identity information of the LTE PLMN to the equivalent PLMN list.

If the UE falls back to a new Location Area (Location Area, LA) of the 2G/3G network when the CSFB flow is initiated, the UE will initiate a Location Area Update (Location Area Update, LAU) flow to a CS domain of the serving MSC/VLR. In the Location Update flow, a serving MSC/VLR may send an equivalent PLMN list to a UE, so that the UE in an idle state performs cell selection/reselection and PLMN selection.

Alternatively, if the UE falls back to one new routing area (Routing Area, RA) of a 2G/3G network when a CSFB flow is initiated, the UE will initiate a Routing Area update flow to a PS domain of the SGSN. In the Router Area update flow, the SGSN may send an equivalent PLMN list to a UE, so that the UE in an idle state performs cell selection/reselection and PLMN selection.

Further, if a UE simultaneously initiates a Location Update flow of a CS domain and a Router Area update flow of a PS domain, both the serving MSC/VLR and the SGSN may send a same equivalent PLMN list to the UE.

When an equivalent PLMN list in a 2G/3G network is received, a UE will store the received equivalent PLMN list to replace the previously stored equivalent PLMN list. Further, the UE adds the stored identity information of the LTE PLMN in the step 402 to the equivalent PLMN list. It shall be noted that, adding the identity information of the LTE PLMN to the equivalent PLMN list generally means adding the PLMN ID to the equivalent PLMN list, for example, the PLMN ID included in a GUTI is added to the equivalent PLMN list. It shall be noted that, if a UE does not receive an equivalent PLMN list when the UE falls back to a 2G/3G network, the UE does not need to add the stored identity information of the LTE PLMN in the step 402 to the stored equivalent PLMN list, as the stored equivalent PLMN list has already included the stored identity information of the LTE PLMN in the step 402.

404, when the CSFB service is ends, a PLMN selection is performed according to the equivalent PLMN list.

The stored identity information of the LTE PLMN has already been added to the equivalent PLMN list through the step 403. A suitable cell (Suitable Cell) for residing may be selected according to the updated equivalent PLMN list when a PLMN selection is performed. That is to say, a suitable cell for residing is selected according to the equivalent PLMN list including the identity information of the LTE PLMN, and an LTE PLMN is selected from available PLMNs of the selected suitable cell. Further, that a PLMN selection is performed according to the equivalent PLMN list may include: an LTE PLMN corresponding to the identity information of the LTE PLMN is selected in priority according to the equivalent PLMN list. That is to say, a PLMN corresponding to the stored identity information of the LTE PLMN is selected in priority from all available PLMNs of the selected suitable cell. Further, the selecting an LTE PLMN in priority may include: a suitable cell (Suitable Cell) for residing is selected, according to the equivalent PLMN list, on a frequency band corresponding to LTE frequency band information, and a PLMN corresponding to the stored identity information of the LTE PLMN is selected in priority from the available PLMNs of the suitable cell.

Alternatively, the LTE frequency information may be information of an LTE frequency band selected when the UE initiates combined registration to the LTE PLMN. When the UE initiates the CSFB service and falls back to a 2G/3G network, the UE may also store the LTE frequency information selected when the combined registration is initiated to the LTE PLMN. In this way, when a return to an LTE is needed after the CSFB service, a suitable cell for residing may be selected, according to the equivalent PLMN list, on a frequency band corresponding to the LTE frequency band information, and a PLMN corresponding to the stored identity information of the LTE PLMN is selected in priority from the available PLMNs of the suitable cell.

Alternatively, the LTE frequency band information may be received, by the UE, from a 2G/3G network. A UE receives an LTE frequency band information sent by a 2G/3G base station in the 2G/3G network. In this way, when a return to an LTE is needed after a CSFB service, a suitable cell (Suitable Cell) for residing may be selected, according to the equivalent PLMN list, on the frequency band corresponding to the LTE frequency information, and a PLMN corresponding to the stored identity information of the LTE PLMN is selected in priority from the available PLMNs of the suitable cell.

Specifically, a 2G/3G base station may select the LTE frequency band information in any of the following way of implementations.

In one alternative way of implementation, a 2G/3G base station receives a connection release message sent by a serving MSC/VLR, wherein, the connection release message includes the identity information of the LTE PLMN registered when a user equipment UE initiates a CSFB service, i.e. the identity information of the LTE PLMN registered by the UE in the step 401. Then, the 2G/3G base station may select LTE frequency band information according to the identity information of the LTE PLMN. It shall be noted that, that 2G/3G base station may select the LTE frequency band information according to the identity information of the LTE PLMN refers to that the 2G/3G base station may select LTE frequency band information by taking the identity information of the LTE PLMN as one factor to consider, and the 2G/3G base station may also select the LTE frequency information by considering other factors, which is not limited in this embodiment.

In another alternative way of implementation, a serving MSC/VLR does not need to send identity information of the LTE PLMN registered by the UE to a 2G/3G base station. That is to say, each of the 2G/3G base station, the serving MSC/VLR and the like, which is in a network side adopts the existing connection release flow. At this moment, the 2G/3G base station may select, according to a CSFB indication received from the serving MSC/VLR, an LTE frequency band (Frequency) information. The selected LTE frequency band information may instruct an LTE frequency band which provides a CSFB service for a UE and which is supported by the serving PLMN, and it may also instruct other LTE frequency band.

Furthermore, a 2G/3G base station may send selected LTE frequency band information to a UE in any of the following ways of implementation.

In one alternative way of implementation, a 2G/3G base station may send selected LTE frequency band information to a UE by making it be included in a connection release message or a channel release message. Specifically, if the 2G/3G base station is a Base Station Subsystem BSS in a 2G network, the selected LTE frequency band information is sent to a UE by making it be included in the channel release (Channel Release) message; and if the 2G/3G base station is a Radio Network Subsystem RNS in a 3G network, the selected LTE frequency information is sent to a UE by making it be included in a RRC connection release message. When a connection release message or a channel release message is received, a UE enters into an idle state.

In another alternative way of implementation, a 2G/3G base station may make selected LTE frequency band information be included in priority information. Then, if the 2G/3G base station is a Base Station Subsystem BSS in a 2G network, the 2G/3G base station sends the priority information to the UE by making it be included in a channel release message; and if a 2G/3G base station is a Radio Network Subsystem RNS in the 3G network, the 2G/3G base station sends the priority information to the UE by making it be included in a mobility information (Mobility Information) message.

The method for selecting an LTE network, which is provided by the embodiment of the present invention, comprising a UE adding identity information of an LTE PLMN registered when a CSFB service is initiated to an equivalent PLMN list, and selecting, according to an updated equivalent PLMN list, the LTE PLMN to return to the LTE network when the CSFB service ends, can ensure that the UE returns to the LTE PLMN registered when the CSFB is initiated, which not only reduces an unnecessary inter-PLMN switch, but also recovers a data service suspended in the previously registered LTE PLMN, thereby improving the service efficiency and promoting the user experience.

Another method for selecting an LTE network is provided in an embodiment of the present invention, in which a UE does not need to update an equivalent PLMN list. As shown in Fig. 5, the method comprises the following steps.

501, a UE performs a combined registration in an LTE Public Land Mobile Network PLMN.

The UE is simultaneously registered to a 2G/3G network and an LTE network. A data service may be performed in the LTE network. When a CS domain service needs to be performed, a CSFB flow may be initiated to fall back to the 2G/3G network.

502, the UE initiates a Circuit Switched Fallback CSFB service to fall back to a 2G/3G network, and stores LTE frequency band information, wherein the LTE frequency band information is LTE frequency band information selected when the UE initiates a combined registration to the LTE PLMN.

Further, the UE may store identity information of the LTE PLMN registered when the CSFB service is initiated, wherein, the stored identity information of the LTE PLMN may be a registered LTE PLMN identity (identity, ID), a Tracking Area Identity (Tracking Area Identity, TAI) including a registered LTE PLMN ID or a Globally Unique Temporary Identity (Globally Unique Temporary Identity, GUTI) including a registered LTE PLMN ID.

503, when the CSFB service ends, the UE performs a PLMN selection on a frequency band corresponding to the LTE frequency band information.

The performing a PLMN selection on a frequency band includes: selecting a suitable cell (Suitable Cell) for residing on a frequency band corresponding to the LTE frequency information, and selecting an LTE PLMN in priority corresponding to the stored identity information of the LTE PLMN from available PLMNs of the suitable cell.

The method for selecting an LTE network, which is provided in the embodiment of the present invention, comprising the UE performing an PLMN selection on an LTE frequency band information selected when a combined registration is initiated, can ensure that the UE returns to the LTE PLMN registered when the CSFB is initiated, which not only reduces an unnecessary inter-PLMN switch, but also recovers a data service suspended in the previously registered LTE PLMN, thereby improving the service efficiency and promoting the user experience.

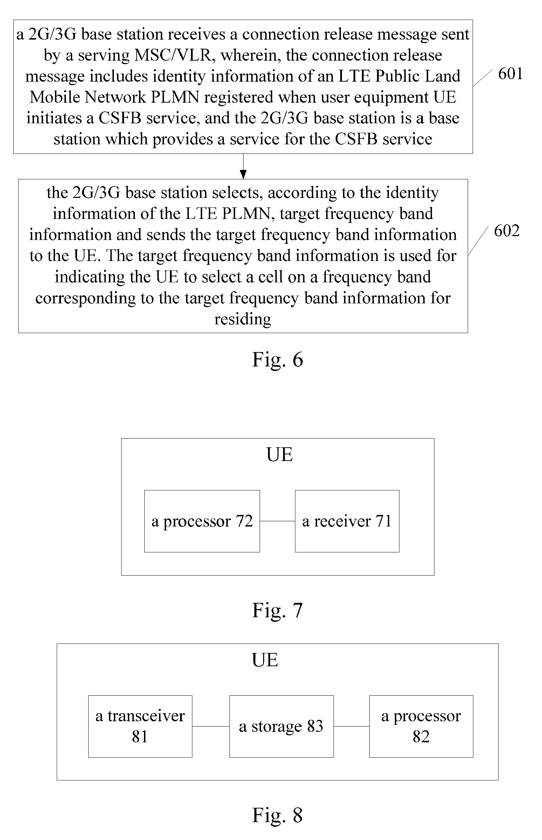

Another method for selecting an LTE network is provided in an embodiment of the present invention. As shown in Fig. 6, the method comprises the following steps.

601, a 2G/3G base station receives a connection release message sent by a serving MSC/VLR, wherein, the connection release message includes identity information of an LTE Public Land Mobile Network PLMN registered when a user equipment UE initiates a CSFB service, and the 2G/3G base station is a base station which provides a service for the CSFB service.

Wherein, the 2G/3G base station is a base station which provides a service for a CS service of the UE, and the UE performs the CSFB service in a serving cell of the 2G/3G base station. For example, the 2G/3G base station may be a BSS/RNS. In this embodiment, when the CSFB service triggered by the UE ends, a serving MSC/VLR may send a CSFB indication, an identity of the UE and identity information of the LTE PLMN registered when the UE initiates the CSFB to the 2G/3G base station. In this way, when the CSFB service of the UE ends, an LTE network registered when the CSFB is initiated previously may be returned to.

It shall be noted that, if the serving MSC/VLR is a registered MSC/VLR of the UE, the serving MSC/VLR acquires the identity of the UE and the identity information of the LTE PLMN registered by the UE from registration information of the UE. If the serving MSC/VLR is not a registered MSC/VLR of the UE, the serving MSC/VLR acquires the identity of the UE and the identity information of the LTE PLMN registered by the UE from the registered MSC/VLR of the UE.

Wherein, an identity of the UE may be a System Architecture Evolution (System Architecture Evolution, SAE) Temporary Mobile Subscriber Identity (SAE Temporary Mobile Subscriber Identity, S-TMSI), an International Mobile Subscriber Identity (International Mobile Subscriber Identity, IMSI) or Temporary Mobile Subscriber Identity (Temporary Mobile Subscriber Identity, TMSI), which is not limited in an embodiment of the present invention. Identity information of the LTE PLMN registered when the UE initiates the CSFB service may be a registered LTE PLMN identity (identity, ID); it may also be a Globally Unique Temporary Identity (Globally Unique Temporary Identity, GUTI) including a registered LTE PLMN ID; it may also be a Tracking Area Identity (Tracking Area Identity, TAI) including registered LTE PLMN ID; and it may also be an E-UTRAN Cell Global Identity (E-UTRAN Cell Global Identity, ECGI) including a registered LTE PLMN ID, which is not limited in an embodiment of the present invention.

602, the 2G/3G base station selects, according to the identity information of the LTE PLMN, target frequency band information and sends the target frequency band information to the UE. The target frequency band information is used for indicating the UE to select a cell on a frequency band corresponding to the target frequency band information for residing.

The 2G/3G base station selects, according to the identity information of the LTE PLMN, target frequency band information, refers to that the 2G/3G base station may select the LTE frequency band information by taking the identity information of the LTE PLMN as a factor to consider, and may also select the LTE frequency information by considering other factors, which is not limited in this embodiment.

Further, the sending the target frequency information to the UE includes: the 2G/3G base station may specifically transmit the selected target frequency band information to the UE in any of the following ways of implementation.

In one alternative way of implementation, a 2G/3G base station may send selected target frequency band information to a UE by making it be included in a connection release message or a channel release message. Specifically, if a 2G/3G base station is a Base Station Subsystem BSS in a 2G network, the selected target frequency information is sent to a UE by making it be included in a Channel Release (Channel Release) message; and if a 2G/3G base station is a Radio Network Subsystem RNS in a 3G network, the selected target frequency information is sent to a UE by making it be included in an RRC connection release message. When a UE receives a connection release message or a Channel Release message, the UE enters into an idle state.

In another alternative way of implementation, a 2G/3G base station may make selected target frequency band information be included in priority information. Then, if the 2G/3G base station is a Base Station Subsystem BSS in a 2G network, the 2G/3G base station sends the priority information to the UE by making it be included in the channel release (Channel Release) message; and if a 2G/3G base station is a Radio Network Subsystem RNS in a 3G network, the 2G/3G base station sends priority information to a UE by making it be included in mobility information (Mobility Information).

For the UE, the UE selects, according to an equivalent PLMN list, a suitable cell (Suitable Cell) for residing on a LTE frequency band corresponding to target frequency information selected by a 2G/3G base station, and selects a PLMN in priority corresponding to identity information of an LTE PLMN from available PLMNs of the suitable cell. It shall be noted that, in this way of implementation, if a UE has already stored LTE frequency band (Frequency) information selected when a combined registration is initiated in an LTE PLMN, the UE may in priority select, according to the stored equivalent PLMN list, a suitable cell (Suitable Cell) for residing on an LTE frequency band corresponding to the stored LTE frequency band information, and in priority selects a PLMN corresponding to the stored identity information of the LTE PLMN from the available PLMNs of the suitable cell.

The method for selecting an LTE network, which is provided by the embodiment of the present invention, comprising when a CSFB service of a UE ends, a 2G/3G base station selecting target frequency band information according to the identity information of an LTE PLMN registered by a UE and sending it to the UE, so that when a connection establishment request to an LTE network is initiated, the UE selects an LTE cell to reside on a frequency band corresponding to the target frequency information, can ensure that the UE returns to the LTE PLMN registered when the CSFB is initiated, which not only reduces an unnecessary inter-PLMN switch, but also recovers a data service suspended in the previously registered LTE PLMN, thereby improving the service efficiency and promoting the user experience.

A UE is provided in another embodiment of the present invention. As shown in Fig. 7, the UE comprises: a processor 72 and a receiver 71.

The receiver 71 is used for receiving an equivalent PLMN list from a 2nd generation/3rd generation 2G/3G network when the UE performs a combined registration in a Long Term Evolution LTE Public Land Mobile Network PLMN and initiating a Circuit Switched Fallback CSFB service and falls back to the 2G/3G network.

The processor 72 is used for adding identity information of the LTE PLMN to the equivalent PLMN list received by the receiver 71, and performing, according to the equivalent PLMN list, a PLMN selection when the CSFB service ends.

Furthermore, the processor 72 is used for selecting the LTE PLMN in priority according to the equivalent PLMN list.

Alternatively, the processor 72 is used for selecting, according to the equivalent PLMN list, a cell on a frequency band corresponding to LTE frequency band information, and selecting the LTE PLMN in priority from available PLMNs for the cell, wherein, the LTE frequency band information is information of an LTE frequency band selected when the UE initiates a combined registration to the LTE PLMN.

Alternatively, the processor 72 is used for selecting, according to the equivalent PLMN list, a cell on a frequency band corresponding to LTE frequency band information, and selecting the LTE PLMN in priority from available PLMNs for the cell, wherein the LTE frequency band information is received, by the UE, from the 2G/3G network.

Through adding identity information of an LTE PLMN registered when a CSFB service is initiated to an equivalent PLMN list, and selecting, according to an updated equivalent PLMN list, the LTE PLMN to return to the LTE network when the CSFB service ends, the UE, provided in the embodiment of the present invention, can ensure that the UE returns to the LTE PLMN registered when the CSFB is initiated, which not only reduces an unnecessary inter-PLMN switch, but also recovers a data service suspended in the previously registered LTE PLMN, thereby improving the service efficiency and promoting the user experience.

A UE is provided in another embodiment of the present invention. As shown in Fig. 8, the UE comprises: a transceiver 81 and a processor 82.

The transceiver 81 is used for interacting with a network device to perform a combined registration in an LTE Public Land Mobile Network PLMN.

The processor 82 is used for performing a PLMN selection on a frequency band corresponding to LTE frequency band information when a Circuit Switched Fallback CSFB service ends, wherein, the LTE frequency band information is information of an LTE frequency band selected when the UE initiates a combined registration to the LTE PLMN.

Furthermore, the processor 82 is used for selecting a cell on the frequency band corresponding to the LTE frequency band information, and selecting the LTE PLMN in priority from available PLMNs for the cell.

Furthermore, the UE further comprises a storage 83.

The storage 83 is used for storing the LTE frequency band information when the transmitter initiates the CSFB service to fall back to a circuit domain.

The processor 82 is also used for acquiring the LTE frequency band information from the storage when the Circuit Switched Fallback CSFB service ends.

Through performing an PLMN selection on an LTE frequency band information selected when a combined registration is initiated, the UE, provided in the embodiment of the present invention, can ensure that the UE returns to the LTE PLMN registered when the CSFB is initiated, which not only reduces an unnecessary inter-PLMN switch, but also recovers a data service suspended in the previously registered LTE PLMN, thereby improving the service efficiency and promoting the user experience.

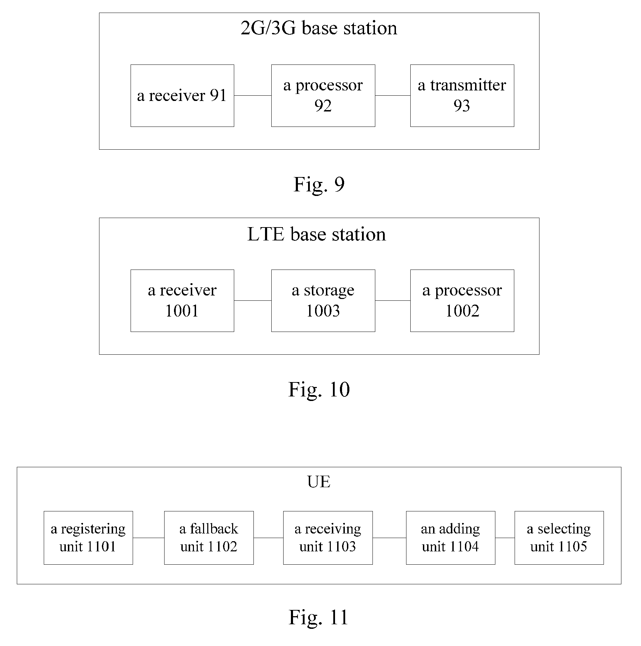

A 2G/3G base station is provided, which is used for providing service for a Circuit Switched Fallback CSFB service. As shown in Fig. 9, the 2G/3G base station comprises a receiver 91, a processor 92 and a transmitter 93.

The receiver 91 is used for receiving a connection release message sent by a serving Mobile Switching Centre/Visitors Location Register MSC/VLR, wherein, the connection release message comprises identity information of an LTE Public Land Mobile Network PLMN registered when a user equipment UE initiates a CSFB service.

The processor 92 is used for selecting, according to the identity information of the LTE PLMN which is received by the receiver 91, target frequency band information, wherein, the target frequency band information is used for indicating the UE to select a cell for residing on a frequency band corresponding to the target frequency band information;

The transmitter 93 is used for sending the target frequency band information selected by the processor 92 to the UE.

Furthermore, the transmitter 93 is used for sending priority information to the UE, wherein, the priority information comprises the frequency band information.

Through selecting target frequency band information according to the identity information of an LTE PLMN registered by a UE and sending it to the UE, so that when a connection establishment request to an LTE network is initiated, the UE selects an LTE cell to reside on a frequency band corresponding to the target frequency information, the 2G/3G base station, provided in the embodiment of the present invention, can ensure that the UE returns to the LTE PLMN registered when the CSFB is initiated, which not only reduces an unnecessary inter-PLMN switch, but also recovers a data service suspended in the previously registered LTE PLMN, thereby improving the service efficiency and promoting the user experience.

An LTE base station is provided in another embodiment of the present invention. As shown in Fig. 10, the base station comprises a receiver 1001 and a processor 1002.

The receiver 1001 is used for receiving a connection establishment request message sent by a user equipment UE when a Circuit Switched Fallback CSFB service ends, wherein, the connection establishment request message comprises an identity of the UE.

The processor 1002 is used for selecting, according to the identity of the UE and identity information of the LTE Public Land Mobile Network PLMN registered when the UE initiates the CSFB service, the LTE PLMN corresponding to the identity information of the LTE PLMN.

Further alternatively, the LTE base station alternatively further comprises: a storage 1003.

The receiver 1001 is further used for receiving the identity of the UE and the identity information of the LTE PLMN, which are sent by a 2G/3G base station, wherein, the 2G/3G base station is a base station which provides service for the CSFB service.

The storage 1003 is used for storing the identity of the UE and the identity information of the LTE PLMN, which are sent by the 2G/3G base station and received by the receiver 1001.

Furthermore, the receiver 1001 is further used for receiving a connection release message sent by a serving Mobile Switching Centre/Visitors Location Register MSC/VLR, wherein, the connection release message comprises an identity of the UE and identity information of the LTE PLMN, and sending the identity of the UE and the identity information of the LTE PLMN to the LTE base station.

Furthermore, when the serving Mobile Switching Centre/Visitors Location Register MSC/VLR is a registered MSC/VLR of the UE, the identity of the UE and the identity information of the LTE PLMN is acquired from a registration information of the UE by the serving MSC/VLR; or,
when the serving MSC/VLR is not a registered MSC/VLR of the UE, the identity of the UE and the identity information of the LTE PLMN is acquired from the registered MSC/VLR by the serving MSC/VLR.

Further alternatively, the LTE base station is alternatively a base station which provides access service when the UE initiates the CSFB service; and the LTE base station further comprises: a storage 1003, used for storing the identity of the UE and the identity information of the LTE PLMN when the UE initiates the CSFB service in the LTE PLMN.

Furthermore, the processor 1002 is further used for deleting the stored identity of the UE and the identity information of the LTE PLMN.

Through determining and selecting the identity information of the LTE PLMN by matching the identity of the UE sent by the UE with the stored identity of the UE, the LTE base station, which is provided in the embodiment of the present invention, can ensure that the UE returns to the LTE PLMN registered when the CSFB is initiated, which not only reduces an unnecessary inter-PLMN network switch, but also recovers a data service suspended in the previously registered LTE PLMN, thereby improving the service efficiency and promoting the user experience, compared with the method, defined in the prior art, which returns to an LTE network after a CSFB.

A UE is provided by another embodiment of the present invention. As shown in Fig. 11, the UE comprises:
a registering unit 1101, used for performing a combined registration in a Long Term Evolution LTE Public Land Mobile Network PLMN;
a fallback unit 1102, used for initiating a Circuit Switched Fallback CSFB service to fall back to a 2G/3G network;
a receiving unit 1103, used for receiving an equivalent PLMN list in the 2G/3G network;
an adding unit 1104, used for adding identity information of the LTE PLMN to the equivalent PLMN list received by the receiving unit 1103; and
a selecting unit 1105, used for performing, according to the equivalent PLMN list modified by the adding unit 1105, a PLMN selection when the CSFB service ends.

Furthermore, the selecting unit 1105 is used for selecting, according to the equivalent PLMN list modified by the adding unit 1104, the LTE PLMN in priority.

Further alternatively, the selecting unit 1105 is specifically used for selecting, according to the equivalent PLMN list modified by the adding unit 1104, a cell on a frequency band corresponding to LTE frequency band information; and selecting the LTE PLMN in priority from available PLMNs for the cell;
wherein, the LTE frequency band information is information of an LTE frequency band selected when the UE initiates a combined registration to the LTE PLMN.

Further alternatively, the selecting unit 1105 is specifically used for:
selecting, according to the equivalent PLMN list modified by the adding unit 1104, a cell on a frequency band corresponding to LTE frequency band information; and selecting the LTE PLMN in priority from available PLMNs for the cell;
wherein, the LTE frequency band information is received from the 2G/3G network by the UE.

Through adding identity information of an LTE PLMN registered when a CSFB service is initiated to an equivalent PLMN list, and selecting, according to an updated equivalent PLMN list, the LTE PLMN to return to the LTE network when the CSFB service ends, the UE, which is provided by the embodiment of the present invention, can ensure that the UE returns to the LTE PLMN registered when the CSFB is initiated, which not only reduces an unnecessary inter-PLMN network switch, but also recovers a data service suspended in the previously registered LTE PLMN, thereby improving the service efficiency and promoting the user experience.

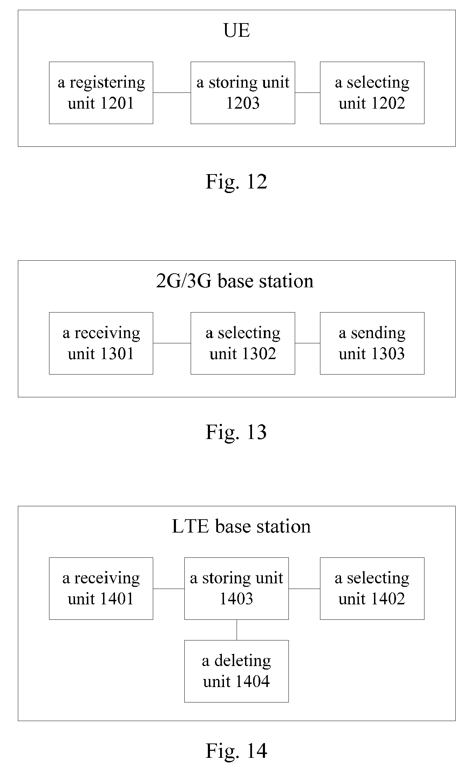

A UE is provided in another embodiment of the present invention. As shown in Fig. 12, the UE comprises a registering unit 1201 and a selecting unit 1202.

The registering unit 1201, used for performing a combined registration in a Long Term Evolution LTE Public Land Mobile Network PLMN;

The selecting unit 1202, used for performing a PLMN selection on a frequency band corresponding to LTE frequency band information when a Circuit Switched Fallback CSFB service ends, wherein, the LTE frequency band information is information of an LTE frequency band selected when the UE initiates a combined registration to the LTE PLMN.

Furthermore, the selecting unit 1202 is used for:
selecting a cell on the frequency corresponding to the LTE frequency information, and selecting the LTE PLMN in priority from available PLMNs for the cell.
Furthermore, the UE further comprises a storing unit 1203.

The storing unit 1203, used for storing the LTE frequency band information when the CSFB service is initiated the and a CS domain is fallen back to.

The selecting unit 1202 is further used for acquiring the LTE frequency information from the storing unit when the Circuit Switched Fallback CSFB service ends.

Through performing a PLMN selection on the selected LTE frequency band information when a combined registration is initiated, the UE, which is provided in the embodiment of the present invention, can ensure that the UE returns to the LTE PLMN registered when the CSFB is initiated, which not only reduces an unnecessary inter-PLMN network switch, but also recovers a data service suspended in the previously registered LTE PLMN, thereby improving the service efficiency and promoting the user experience.

A 2G/3G base station is provided in the embodiment of the present invention, which is used for providing service for a Circuit Switched Fallback CSFB service. As shown in Fig. 13, the base station comprises a receiving unit 1301, a selecting unit 1302 and a sending unit 1303.

The receiving unit 1301, used for receiving a connection release message sent by a serving Mobile Switching Centre/Visitors Location Register MSC/VLR, wherein, the connection release message comprises identity information of an LTE Public Land Mobile Network PLMN registered when a user equipment UE initiates a CSFB service.

The selecting unit 1302 is used for selecting, according to the identity information of the LTE PLMN which is received by the receiving unit 1301, target frequency band information, wherein, the target frequency band information is used for indicating the UE to select a cell for residing on a frequency band corresponding to the target frequency band information.

The sending unit 1303 is used for sending the target frequency band information selected by the selecting unit 1302 to the UE.

Furthermore, the sending unit 1303 is used for:
sending priority information to the UE, wherein, the priority information comprises the frequency band information.

Through selecting target frequency band information according to the identity information of an LTE PLMN registered by UE and sending it to the UE, so that when a connection establishment request to an LTE network is initiated, the UE selects an LTE cell to reside on a frequency band corresponding to the target frequency information, the base station, which is provided by the embodiment of the present invention, can ensure that the UE returns to the LTE PLMN registered when the CSFB is initiated, which not only reduces an unnecessary inter-PLMN network switch, but also recovers a data service suspended in the previously registered LTE PLMN, thereby improving the service efficiency and promoting the user experience.

A base station is provided in another embodiment of the preset invention, and the base station may be an LTE base station. As shown in Fig. 14, the base station comprises a receiving unit 1401 and a selecting unit 1402.

The receiving unit 1401, used for receiving a connection establishment request message sent by a user equipment UE when a Circuit Switched Fallback CSFB service ends, wherein, the connection establishment request message comprises an identity of the UE.

The selecting unit 1402, used for selecting, according to the identity of the UE and identity information of LTE Public Land Mobile Network PLMN registered when the UE initiates the CSFB service, which are received by the receiving unit 1401, the LTE PLMN corresponding to the identity information of the LTE PLMN.

Furthermore, the receiving unit 1401 is further used for:
before receiving the identity of the UE and the identity information of the LTE PLMN sent by a 2G/3G base station, receiving, by the 2G/3G base station, a connection release message sent a serving Mobile Switching Centre/Visitors Location Register MSC/VLR, wherein, the connection release message comprises the identity of the UE and the identity information of the LTE PLMN and the 2G/3G base station sends the identity of the UE and the identity information of the LTE PLMN to the 2G/3G base station.

Furthermore, when the serving MSC/VLR is a registered MSC/VLR of the UE, the identity of the UE and the identity information of the LTE PLMN is acquired from a registration information of the UE by the serving MSC/VLR; or,
when the serving MSC/VLR is not a registered MSC/VLR of the UE, the identity of the UE and the identity information of the LTE PLMN is acquired from the registered MSC/VLR by the serving MSC/VLR.

Furthermore, the base station is a base station which provides an access service when the UE initiates the CSFB service; and the LTE base station further comprises:
a storing unit 1403, used for saving the identity of the UE and the identity information of the LTE PLMN when the UE initiates the CSFB service in the LTE PLMN.

Furthermore, the base station further comprises a deleting unit 1404.

The deleting unit 1404 is used for deleting the stored identity of the UE and the identity information of the LTE PLMN.

Through determining and selecting the identity information of the LTE PLMN by matching the identity of the UE sent by the UE with the stored identity of the UE, the base station, which is provided in the embodiment of the present invention, can ensure that the UE returns to the LTE PLMN registered when the CSFB is initiated, which not only reduces an unnecessary inter-PLMN network switch, but also recovers a data service suspended in the previously registered LTE PLMN, thereby improving the service efficiency and promoting the user experience, compared with the method of returning to an LTE network after a CSFB which is defined by the prior art.

Through the description of the embodiments above, those skilled in the art to which the present invention pertains may clearly understand that, the present invention can be realized through software with necessary general hardware, or certainly, it may also be realized through hardware, but in most cases, the former is a better way of implementation. Based on this kind of understanding, the technical solution of the present invention or the contribution part of the present invention to the prior art can be embodied substantially in the form of a software product. The computer software product is stored in a readable storage medium, such as a soft disk, a hard disk, an optical disk or the like of a computer, which includes a plurality of instructions enabling computer device (it may be a personal computer, a server, a network device or the like) to execute the methods of the embodiments of the present invention.

What described above are merely some specific embodiments of the present invention, however, the protection scope of the present invention is not to limit to them. Any change or substitution that is readily conceived for any one skilled in the art within the technical scope disclosed by the invention shall fall into the protection scope of the invention. Therefore, the protection scope of the present invention shall be defined by the claims.

## Claims

1. A method for selecting a Long Term Evolution LTE network, comprising:
performing, by a user equipment UE, a combined registration in an LTE Public Land Mobile Network PLMN;
initiating, by the UE, a Circuit Switched Fallback CSFB service to fall back to a 2nd generation/3rd generation 2G/3G network;
receiving, by the UE, an equivalent PLMN list in the 2G/3G network;
adding, by the UE, identity information of the LTE PLMN to the equivalent PLMN list; and
performing, by the UE, a PLMN selection according to the equivalent PLMN list when the CSFB service ends.

2. The method according to claim 1, wherein the performing a PLMN selection according to the equivalent PLMN list comprises:
selecting the LTE PLMN in priority according to the equivalent PLMN list.

3. The method according to claim 2, wherein
the selecting the LTE PLMN in priority comprises:
selecting, according to the equivalent PLMN list, a cell on a frequency band corresponding to LTE frequency band information; and
selecting the LTE PLMN in priority from available PLMNs for the cell;
wherein, the LTE frequency band information is information of an LTE frequency band selected by the UE when the UE initiates a combined registration to the LTE PLMN.

4. The method according to claim 2, wherein
the selecting the LTE PLMN in priority comprises:
selecting, according to the equivalent PLMN list, a cell on a frequency band corresponding to LTE frequency band information; and
selecting the LTE PLMN in priority from available PLMNs for the cell;
wherein, the LTE frequency band information is received from the 2G/3G network by the UE.

5. A method for selecting a Long Term Evolution LTE network, comprising:
performing, by user equipment UE, a combined registration in an LTE Public Land Mobile Network PLMN;
performing, by the UE, a PLMN selection on a frequency band corresponding to LTE frequency band information when a Circuit Switched Fallback CSFB service ends, wherein, the LTE frequency band information is information of an LTE frequency band selected by the UE when the UE initiates a combined registration to the LTE PLMN.

6. The method according to claim 5, wherein the performing, by the UE, a PLMN selection on the frequency band corresponding to the LTE frequency band information, comprises:
selecting, by the UE, a cell on the frequency band corresponding to the LTE frequency band information; and
selecting the LTE PLMN in priority from available PLMNs for the cell.

7. The method according to claim 5 or 6, wherein the method further comprises:
storing the LTE frequency band information when the UE initiates the CSFB service and falls back to a circuit domain.

8. A method for selecting a Long Term Evolution LTE network, comprising:
receiving, by a 2nd generation/3rd generation 2G/3G base station, a connection release message sent by a serving Mobile Switching Centre/Visitors Location Register MSC/VLR, wherein, the connection release message comprises identity information of an LTE Public Land Mobile Network PLMN registered when a user equipment UE initiates a CSFB service, and the 2G/3G base station is a base station which provides a service for the CSFB service;
selecting, by the 2G/3G base station, target frequency band information according to the identity information of the LTE PLMN; and
sending the target frequency band information to the UE, wherein, the target frequency band information is used for indicating the UE to select a cell for residing on a frequency band corresponding to the target frequency band information.

9. The method according to claim 8, wherein the sending the target frequency band information to the UE comprises:
sending priority information to the UE, wherein, the priority information comprises the frequency band information.

10. A method for selecting a Long Term Evolution LTE network, comprising:
receiving, by an LTE base station, a connection establishment request message sent by the UE when a Circuit Switched Fallback CSFB service ends, wherein, the connection establishment request message comprises an identity of the UE; and
selecting, by the LTE base station, in accordance with the identity of the UE and identity information of an LTE Public Land Mobile Network PLMN registered when the UE initiates the CSFB service, the LTE PLMN corresponding to the identity information of the LTE PLMN.

11. The method according to claim 10, wherein the method further comprises:
receiving and storing, by the LTE base station, the identity of the UE and the identity information of the LTE PLMN, which are sent by a 2nd generation/3rd generation 2G/3G base station, wherein, the 2G/3G base station is a base station which provides service for the CSFB service.

12. The method according to claim 11, wherein before receiving, by the LTE base station, the identity of the UE and the identity information of the LTE PLMN, which are sent by the 2G/3G base station, the method further comprises:
receiving, by the 2G/3G base station, a connection release message sent by a serving Mobile Switching Centre/Visitors Location Register MSC/VLR, wherein, the connection release message comprises the identity of the UE and the identity information of the LTE PLMN;
sending, by the 2G/3G base station, the identity of the UE and the identity information of the LTE PLMN to the LTE base station.

13. The method according to claim 12, wherein
if the serving MSC/VLR is a registered MSC/VLR of the UE, the identity of the UE and the identity information of the LTE PLMN are acquired, by the serving MSC/VLR, from registration information of the UE; or,
if the serving MSC/VLR is not a registered MSC/VLR of the UE, the identity of the UE and the identity information of the LTE PLMN are acquired, by the serving MSC/VLR, from the registered MSC/VLR of the UE.

14. The method according to claim 10, wherein the LTE base station is a base station which provides an access service when the UE initiates the CSFB service, and
the method further comprises:
storing, by the LTE base station, the identity of the UE and the identity information of the LTE PLMN when the UE initiates the CSFB service in the LTE PLMN.

15. The method according to any of claims 11-14, wherein the method further comprises:
deleting, by the LTE base station, the stored identity of the UE and the identity information of the LTE PLMN.

16. A user equipment UE, comprising:
a receiver, configured to receive an equivalent PLMN list from a 2nd generation/3rd generation 2G/3G network when the UE performs a combined registration in a Long Term Evolution LTE Public Land Mobile Network PLMN, initiates a Circuit Switched Fallback CSFB service and falls back to the 2G/3G network; and
a processor, configured to add identity information of the LTE PLMN to the equivalent PLMN list received by the receiver, and perform, according to the equivalent PLMN list, a PLMN selection when the CSFB service ends.

17. The UE according to claim 16, wherein the processor is configured to:
select the LTE PLMN in priority according to the equivalent PLMN list.

18. The UE according to claim 17, wherein the processor is configured to:
select, according to the equivalent PLMN list, a cell on a frequency band corresponding to LTE frequency band information; and
select the LTE PLMN in priority from available PLMNs for the cell;
wherein, the LTE frequency band information is information of an LTE frequency band selected by the UE when the UE initiates a combined registration to the LTE PLMN.

19. The UE according to claim 17, wherein the processor is configured to:
select, according to the equivalent PLMN list, a cell on a frequency band corresponding to LTE frequency band information; and
select the LTE PLMN in priority from available PLMNs for the cell;
wherein, the LTE frequency band information is received, by the UE, from the 2G/3G network.

20. A user equipment UE, comprising:
a transceiver, configured to interact with a network device to perform a combined registration in an LTE Public Land Mobile Network PLMN; and
a processor, configured to perform a PLMN selection on a frequency band corresponding to LTE frequency band information when a Circuit Switched Fallback CSFB service ends, wherein, the LTE frequency band information is information of an LTE frequency band selected by the UE when the UE initiates a combined registration to the LTE PLMN.

21. The UE according to claim 20, wherein the processor is configured to:
select a cell on the frequency band corresponding to the LTE frequency band information, and select the LTE PLMN in priority from available PLMNs for the cell.

22. The UE according to claim 20 or 21, further comprising:
a storage, configured to store the LTE frequency band information when the transceiver initiates the CSFB service to fall back to a circuit domain, wherein
the processor is also configured to acquire the LTE frequency band information from the storage when the Circuit Switched Fallback CSFB service ends.

23. A 2nd generation/3rd generation 2G/3G base station, used for providing service for a Circuit Switched Fallback CSFB service, comprising:
a receiver, configured to receive a connection release message sent by a serving Mobile Switching Centre/Visitors Location Register MSC/VLR, wherein, the connection release message comprises identity information of an LTE Public Land Mobile Network PLMN registered when a user equipment UE initiates a CSFB service;
a processor, configured to select, according to the identity information of the LTE PLMN which is received by the receiver, target frequency band information, wherein, the target frequency band information is used for indicating the UE to select a cell for residing on a frequency band corresponding to the target frequency band information;
a transmitter, configured to send the target frequency band information selected by the processor to the UE.

24. The 2G/3G base station according to claim 23, wherein the transmitter is configured to:
send priority information to the UE, wherein, the priority information comprises the frequency band information.

25. A Long Term Evolution LTE base station, comprising:
a receiver, configured to receive a connection establishment request message sent by a user equipment UE when a Circuit Switched Fallback CSFB service ends, wherein, the connection establishment request message comprises an identity of the UE; and
a processor, configured to select, according to the identity of the UE and identity information of the LTE Public Land Mobile Network PLMN registered when the UE initiates the CSFB service, the LTE PLMN corresponding to the identity information of the LTE PLMN.

26. The LTE base station according to claim 25, further comprising: a storage, wherein the receiver is further configured to receive the identity of the UE and the identity information of the LTE PLMN, which are sent by a 2nd generation/3rd generation 2G/3G base station, wherein, the 2G/3G base station is a base station which provides service for the CSFB service; and
the storage is configured to store the identity of the UE and the identity information of the LTE PLMN, which are sent by the 2G/3G base station and received by the receiver.

27. The LTE base station according to claim 25, wherein the LTE base station is a base station which provides access service when the UE initiates the CSFB service; and the LTE base station further comprises:
a storage, configured to store the identity of the UE and the identity information of the LTE PLMN when the UE initiates the CSFB service in the LTE PLMN.

28. The LTE base station according to claim 26 or 27, wherein the processor is further configured to delete the stored identity of the UE and the identity information of the LTE PLMN.

29. A user equipment UE, comprising:
a registering unit, configured to perform a combined registration in a Long Term Evolution LTE Public Land Mobile Network PLMN;
a fallback unit, configured to initiate a Circuit Switched Fallback CSFB service to fall back to a 2nd generation/3rd generation 2G/3G network;
a receiving unit, configured to receive an equivalent PLMN list in the 2G/3G network;
an adding unit, configured to add identity information of the LTE PLMN to the equivalent PLMN list received by the receiving unit; and
a selecting unit, configured to perform, according to the equivalent PLMN list modified by the adding unit, a PLMN selection when the CSFB service ends.

30. The UE according to claim 29, wherein the selecting unit is configured to:
select, according to the equivalent PLMN list modified by the adding unit, the LTE PLMN in priority.

31. The UE according to claim 30, wherein the selecting unit is configured to:
select, according to the equivalent PLMN list modified by the adding unit, a cell on a frequency band corresponding to LTE frequency band information; and select the LTE PLMN in priority from available PLMNs for the cell;
wherein, the LTE frequency band information is information of an LTE frequency band selected by the UE when the UE initiates a combined registration to the LTE PLMN.

32. The UE according to claim 30, wherein the selecting unit is configured to:
select, according to the equivalent PLMN list modified by the adding unit, a cell on a frequency band corresponding to LTE frequency band information; and select the LTE PLMN in priority from available PLMNs for the cell;
wherein, the LTE frequency band information is received from the 2G/3G network by the UE.

33. A user equipment UE, comprising:
a registering unit, configured to perform a combined registration in a Long Term Evolution LTE Public Land Mobile Network PLMN;
a selecting unit, configured to perform a PLMN selection on a frequency band corresponding to LTE frequency band information when a Circuit Switched Fallback CSFB service ends, wherein, the LTE frequency band information is information of an LTE frequency band selected by the UE when the UE initiates a combined registration to the LTE PLMN.

34. The UE according to claim 33, wherein the selecting unit is configured to:
select a cell on the frequency corresponding to the LTE frequency information, and select the LTE PLMN in priority from available PLMNs for the cell.

35. The UE according to claim 33 or 34, further comprising:
a storing unit, configured to store the LTE frequency band information when the CSFB service is initiated the and a CS domain is fallen back to, wherein
the selecting unit is further configured to acquire the LTE frequency information from the storing unit when the Circuit Switched Fallback CSFB service ends.

36. A 2nd generation/3rd generation 2G/3G base station, configured to providing service for a Circuit Switched Fallback CSFB service, comprising:
a receiving unit, configured to receive a connection release message sent by a serving Mobile Switching Centre/Visitors Location Register MSC/VLR, wherein, the connection release message comprises identity information of an LTE Public Land Mobile Network PLMN registered when a user equipment UE initiates a CSFB service;
a selecting unit, configured to select, according to the identity information of the LTE PLMN which is received by the receiving unit, target frequency band information, wherein, the target frequency band information is used for indicating the UE to select a cell for residing on a frequency band corresponding to the target frequency band information; and
a sending unit, configured to send the target frequency band information selected by the selecting unit to the UE.

37. The 2G/3G base station according to claim 36, wherein the sending unit is configured to:
send priority information to the UE, wherein, the priority information comprises the frequency band information.

38. A Long Term Evolution LTE base station, comprising:
a receiving unit, configured to receive a connection establishment request message sent by a user equipment UE when a Circuit Switched Fallback CSFB service ends, wherein, the connection establishment request message comprises an identity of the UE;
a selecting unit, configured to select, according to the identity of the UE and identity information of LTE Public Land Mobile Network PLMN registered when the UE initiates the CSFB service, which are received by the receiving unit, the LTE PLMN corresponding to the identity information of the LTE PLMN.

39. The LTE base station according to claim 38, wherein the receiving unit is further configured to:
receive and store the identity of the UE and the identity information of the LTE PLMN, which are sent by a 2nd generation/3rd generation 2G/3G base station, wherein, the 2G/3G base station is a base station which provides a service for the CSFB service.

40. The LTE base station according to claim 38, wherein the LTE base station is a base station which provides an access service when the UE initiates the CSFB service; and the LTE base station further comprises:
a storing unit, configured to save the identity of the UE and the identity information of the LTE PLMN when the UE initiates the CSFB service in the LTE PLMN.

41. The LTE base station according to any of claims 38-40, further comprising:
a deleting unit, configured to delete the stored identity of the UE and the identity information of the LTE PLMN.
